(19) **Europäisches Patentamt / European Patent Office / Office européen des brevets**

(11) **EP 4 264 172 B1**

(12) **FASCICULE DE BREVET EUROPEEN**

(45) Date de publication et mention de la délivrance du brevet:
**23.07.2025 Bulletin 2025/30**

(21) Numéro de dépôt: **21839101.9**

(22) Date de dépôt: **14.12.2021**

(51) Classification Internationale des Brevets (IPC):
**G01B 5/14** *(2006.01)* **G01B 5/30** *(2006.01)*

(52) Classification Coopérative des Brevets (CPC):
**G01B 5/14;** G01B 5/30

(86) Numéro de dépôt international:
**PCT/EP2021/085572**

(87) Numéro de publication internationale:
**WO 2022/128969 (23.06.2022 Gazette 2022/25)**

(54) **DISPOSITIF ET PROCÉDÉ DE MESURE DE JEU MÉCANIQUE DANS UNE CONDUITE HYDRAULIQUE**

VORRICHTUNG UND VERFAHREN ZUR MESSUNG DES MECHANISCHEN SPIELS IN EINER HYDRAULIKLEITUNG

DEVICE AND METHOD FOR MEASURING MECHANICAL PLAY IN A HYDRAULIC LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013561**

(43) Date de publication de la demande:
**25.10.2023 Bulletin 2023/43**

(73) Titulaire: **Electricité de France**
**75008 Paris (FR)**

(72) Inventeurs:
• **LHUILLIER, Vincent**
**92160 Antony (FR)**
• **JAIN, Pascal**
**78990 Elancourt (FR)**
• **DESPREZ, Lucien**
**92160 Antony (FR)**

(74) Mandataire: **Plasseraud IP**
**104 Rue de Richelieu**
**CS92104**
**75080 Paris Cedex 02 (FR)**

(56) Documents cités:
**CN-A- 109 027 436      SU-A1- 922 505**
**US-A1- 2017 131 175**

## Description

### Domaine technique

La présente invention relève du domaine des installations hydrauliques (de type barrages hydrauliques, ou équivalent), comprenant des conduites amenées à être sous pression. Elle concerne plus particulièrement un test de telles conduites hydrauliques pour maintenance dans de telles installations.

### Technique antérieure

Dans les aménagements de production d'énergie électrique d'origine hydraulique et les stations de transfert d'énergie par pompage (ou STEP) entre autres, l'eau est transportée entre les réservoirs et les centrales hydrauliques par des conduites (encore appelées tuyauteries). Dans certains cas, ces conduites sont installées dans des galeries rocheuses avec plusieurs centaines de mètres de dénivelé.

Afin de supporter le poids propre de la conduite et de limiter sa déformation mécanique lorsqu'elle est mise en pression, du béton peut être déversé entre la paroi extérieure de la conduite et la roche. Cependant, malgré le coulage du béton, des jeux mécaniques (qui peuvent être dus notamment à un retrait du béton) peuvent subsister entre la conduite et la paroi rigide formée par le béton et la roche, de sorte que lorsque l'eau s'écoule à forte pression dans la conduite, celle-ci peut présenter des risques de déformation voire d'effondrement. Les documents US 2017/131175 A1, SU 922505 A1 et CN 109027436 A divulguent par exemple des dispositifs surveillant l'état de conduites hydrauliques.

Par conséquent, il est recherché de mesurer les jeux mécaniques présents entre la surface extérieure d'une conduite et la paroi rigide formée par la roche et le béton, de sorte à combler par exemple ces jeux. Par ailleurs, l'évaluation de la rigidité de l'ensemble formé par la conduite et la paroi rigide rocheuse et/ou bétonnée est préférable afin d'assurer la tenue mécanique de la conduite.

Des solutions visant à mesurer le comportement mécanique d'une conduite en pression peuvent consister par exemple à disposer des jauges de déformation sur toute la circonférence de la conduite à sec connectées à un système d'enregistrement et de conditionnement. Lorsque l'eau circule à forte pression dans la conduite, les jauges de déformation relèvent alors des mesures de déformation de la conduite. Cependant, ce dispositif de mesure requiert une installation de matériel complexe et risquée pour le personnel intervenant de par les accès difficiles aux conduites. De plus, l'utilisation d'un tel dispositif nécessitant la mise en eau de la conduite, la forte pression exercée entraîne des risques importants d'arrachement du dispositif.

### Résumé

La présente divulgation vient améliorer la situation actuelle.

Il est proposé de tester hors pression hydraulique une conduite d'une telle installation pour pallier les inconvénients précités. La présente description vise selon un premier aspect tel que défini dans la revendication indépendante 1, un dispositif de mesure d'un jeu mécanique entre une conduite déformable et une paroi rigide, le dispositif comprenant au moins un chariot porteur agencé :

- pour se déplacer à l'intérieur de la conduite jusqu'à une portion de la conduite de position prédéfinie, et
- pour porter une structure de mesure comprenant au moins un vérin de poussée relié à un patin de poussée, le patin de poussée étant conformé pour prendre appui sur un élément de surface intérieure de la portion de conduite.

Le vérin de poussée est, de plus, agencé pour convertir une pression reçue en une force mécanique exercée, via le patin de poussée, sur l'élément de surface intérieure de la portion de conduite en induisant au moins une déformation radiale de la portion de conduite jusqu'à détection d'un seuil.

Le dispositif comporte en outre un organe de mise en pression du vérin de poussée, apte à mesurer au moins la pression exercé sur le vérin de poussée.

On entend par jeu mécanique, une zone d'espace entre une surface extérieure de la conduite et une paroi rigide entourant la conduite, comme la paroi d'une galerie souterraine dans laquelle est installée la conduite.

On entend par structure de mesure, une structure de mise en poussée de la conduite et donc ayant pour effet la déformation de la conduite induite par cette mise en poussée. Une telle structure de mesure permet alors de transmettre une pression mesurable reçue par un organe de mise en pression et d'obtenir une déformation mesurable induite par une telle pression.

En effet, lorsqu'une pression (ou pression de poussée) est exercée sur le vérin de poussée (et plus particulièrement sur une chambre du vérin de poussée) de la structure de mesure, le vérin de poussée sous pression génère une force mécanique et la transmet au patin de poussée relié au vérin de poussée. Le patin de poussée de la structure de mesure exerce alors à son tour, une pression sur la surface intérieure de la portion de conduite correspondant à une pression de contact. Une telle pression de contact exercée par le patin de poussée est a priori différente de la pression reçue par le vérin de poussée, la pression reçue étant une pression hydraulique. La pression de contact occasionne des contraintes dans la portion de conduite en contact avec le patin de poussée. En particulier, la répartition et la valeur de ces contraintes dépendent entre autres, des caractéristiques physiques et géométriques de la portion de conduite ainsi que du dimensionnement du patin de poussée et de l'effort qu'il exerce. Dans la suite du texte les termes « contrainte » et « pression de poussée », seront employés et, bien que pouvant s'exprimer dans la même unité - par exemple en Pascal - ces grandeurs ne sont pas de même nature ; la contrainte relève d'une grandeur attachée à la résistance du matériau, la pression de poussée relève quant à elle de la pression hydraulique exercée sur les vérins. Bien que la contrainte subie par le matériau dépende de la pression de poussée, ces grandeurs ne peuvent être ni comparées, ni confondues.

On entend par chariot porteur, une structure de convoyage et de positionnement du dispositif à l'intérieur de la conduite. Le chariot porteur permet notamment de supporter le poids de la structure de mesure et est utilisé lors de phases de montage, de déplacement et de mise en position du dispositif dans la conduite.

On entend par un seuil détecté, une valeur particulière de pression et/ou de déformation induite détectée, traduisant une situation particulière de la conduite. Un premier seuil correspond à une valeur particulière de déformation traduisant une situation de contact entre la portion de la conduite ayant subi la déformation et la paroi rigide entourant ladite portion de la conduite. Il s'agit alors d'un premier seuil à atteindre et permettant d'évaluer un jeu mécanique entre la conduite et la paroi rigide. Un deuxième (respectivement troisième) seuil correspond à une limite critique de déformation (respectivement, de pression), au-delà de laquelle apparait un risque de dégradation et de déformation irréversible de la conduite. Le deuxième (respectivement troisième) seuil correspond a priori à un seuil de déformation (respectivement de pression) maximale de conduite. Les deuxième et troisième seuils sont ainsi à des seuils à ne pas dépasser et qui permettent d'évaluer la rigidité locale de l'installation hydraulique (donc de la conduite avec la paroi rocheuse et/ou bétonnée).

Un tel dispositif permet alors d'évaluer, par détection d'un premier seuil, un jeu mécanique entre une conduite et une paroi rigide l'entourant ainsi que, la rigidité locale d'un tel ensemble et ce, par exercice d'une pression et relevé de la déformation induite par cette pression sans dépasser les deuxième et/ou troisième seuils. L'utilisation d'un dispositif unique et mobile à l'intérieur de la conduite dispense d'une intervention complexe, nécessitant des échafaudages à l'intérieur de la conduite et risquée pour le personnel intervenant. Le matériel d'acquisition utilisé pour relever la déformation induite par la pression est également simplifié comparé à l'installation des multiples jauges de déformation placées sur toute la circonférence d'une portion de conduite. La mobilité du dispositif grâce au chariot porteur permet par ailleurs l'inspection en une seule vidange de plusieurs portions (ou sections) de la conduite et de répéter l'utilisation de la structure de mesure lors de l'intervention.

Les caractéristiques exposées dans les paragraphes suivants peuvent, optionnellement, être mises en œuvre, indépendamment les unes des autres ou en combinaison les unes avec les autres :

Dans un mode de réalisation, la portion de la conduite du dispositif est de forme cylindrique d'axe de révolution X, dans lequel un organe de liaison relie la structure de mesure au chariot porteur de sorte que la structure de mesure est montée mobile en rotation par rapport au chariot porteur selon l'axe de révolution X.

En effet, dans le cas d'une portion de conduite cylindrique de position prédéfinie, une structure de mesure montée mobile en rotation par rapport au chariot porteur permet une liaison de type pivot entre la structure de mesure et le chariot porteur. Ainsi, lorsque le chariot porteur est positionné à l'intérieur d'une portion de conduite de position prédéfinie, la structure de mesure peut inspecter plusieurs secteurs angulaires de la portion de conduite par rotation autour de l'axe de révolution X, de sorte à évaluer un jeu mécanique entre la portion de conduite et la paroi rigide ainsi qu'une rigidité de l'ensemble sur la portion de conduite mise à l'épreuve. En variante, la structure de mesure peut également connaître un degré de liberté en translation selon l'axe de révolution X de la portion de conduite et/ou selon un axe radial Y orthogonal à l'axe X de la portion de conduite, notamment lorsque les jeux mécaniques en différents points de la portion de conduite sont différents.

Dans un mode de réalisation, le chariot porteur du dispositif comporte des roues pour se déplacer à l'intérieur de la conduite par contact des roues sur une surface intérieure de la conduite. Le chariot porteur comporte en outre au moins un bras relié mécaniquement aux roues, le bras comprenant au moins un patin de fixation conformé pour prendre appui sur un élément de surface intérieure de la portion de conduite de sorte à bloquer le chariot porteur sur la portion de la conduite.

Ainsi, selon ce mode de réalisation, les roues du chariot porteur assurent le convoyage de l'ensemble du dispositif à l'intérieur de la conduite et permettent notamment une liaison entre le dispositif et la surface intérieure de la portion de conduite où la rotation est libre selon l'axe de révolution X et la translation est libre selon l'axe de poussée radiale Y. Les bras du chariot porteur soutiennent alors l'ensemble du dispositif sur une telle surface intérieure de la conduite. Le patin de fixation du chariot porteur du dispositif permet en outre de bloquer le chariot porteur - et donc le dispositif - sur une portion de conduite de position prédéfinie. Le chariot porteur assure ainsi un rôle de mise en position du dispositif à l'intérieur de la conduite pour permettre l'utilisation de la structure de mesure une fois que le dispositif a atteint la portion de conduite visée.

Dans un mode de réalisation, le chariot porteur du dispositif comporte une pluralité de bras reliés chacun mécaniquement à des roues et articulés ensemble selon une liaison parapluie.

La multiplicité des bras mécaniques du chariot porteur offre en effet une stabilité du dispositif à l'intérieur de la conduite. Le caractère articulé de ces bras mécaniques permet notamment au dispositif de s'adapter à la forme de la conduite mais également de faciliter son assemblage à l'intérieur de la conduite. On entend alors par « liaison parapluie », une liaison de sorte qu'un pliage et un dépliage des bras mécaniques du chariot porteur par rapport à un axe de révolution X de la conduite est possible par exemple, la longueur hors-tout du chariot porteur étant alors variable selon que les bras mécaniques du chariot porteur sont articulés dans un mode plié ou dépliés.

Dans un mode de réalisation, l'organe de mise en pression du vérin de poussée du dispositif est relié au vérin de poussée par au moins une ligne d'alimentation de vérin pilotable à distance, de sorte que la pression exercée sur le vérin de poussée est ajustable et mesurable à distance.

En effet, le dispositif est alimenté en pression par un organe de mise en pression de sorte que les vérins de poussée de la structure de mesure du dispositif reçoivent une pression et induisent une déformation de la portion de conduite. L'organe de mise en pression du dispositif et les vérins de poussée sont reliés par une ligne d'alimentation de vérin, de sorte que la pression provenant de l'organe de mise en pression est transmise aux vérins de poussée via la ligne d'alimentation de vérin. Une telle ligne d'alimentation instrumentée via des manomètres permet alors de quantifier la pression répartie et distribuée à chaque vérin de poussée. En variante, cette pression peut être répartie et mesurée au niveau de l'organe de mise en pression. Le pilotage à distance de la ligne d'alimentation de vérin permet un pilotage à distance de la pression envoyée au dispositif. Ainsi, la pression est pilotée par un organe de mise en pression correspondant à un système de pompage automatisé, l'organe de mise en pression pouvant se situer à l'extérieur ou à l'intérieur de la conduite. En variante, la mise en pression peut être manuellement exercée par des opérateurs à l'aide de pompes manuelles et de manomètres permettant de mesurer la pression manuellement exercée.

Dans un mode de réalisation, la déformation radiale de la portion de conduite induite par la pression exercée sur le vérin de poussée du dispositif correspond à un allongement de la portion de conduite, cet allongement traduisant un rapprochement d'une surface extérieure de la portion de conduite par rapport à la paroi rigide, cet allongement correspondant au jeu mécanique entre la portion de conduite et la paroi rigide.

En effet, lorsqu'une pression est exercée par l'organe de mise en pression sur le vérin de poussée de la structure de mesure du dispositif sur la conduite, la structure de mesure induit une déformation radiale de la portion de conduite du fait du contact entre le patin de poussée et la surface intérieure de la portion de conduite. La portion de conduite se déforme donc de l'intérieur selon une direction radiale à l'axe de la conduite. Cette déformation se traduit, d'un point de vue extérieur à la conduite, par un allongement dans le sens radial de la conduite, l'allongement se faisant sur la zone d'espace existant éventuellement entre la conduite dans cette portion prédéfinie et la paroi rigide, autrement dit, sur le jeu mécanique entre la portion de conduite et la paroi rigide. En déformant la portion de conduite, le dispositif rapproche par conséquent la portion de conduite de la paroi rigide qui lui fait face en tous points entourant la conduite.

Selon l'invention, le dispositif comporte en outre un appareillage de mesure apte à obtenir une mesure de la déformation radiale de la portion de conduite.

La pression exercée sur le vérin de poussée du dispositif est mesurable par l'organe de mise en pression du dispositif. La déformation radiale résultant de cette mise en pression est également mesurable par un appareillage de mesure inclus dans le dispositif, de sorte que le dispositif est apte à obtenir une mesure de la déformation radiale induite.

Dans un mode de réalisation, l'appareillage de mesure du dispositif comporte au moins un capteur de déplacement relié au patin de poussée.

En effet, la mesure de déformation radiale induite par la mise en pression du vérin de poussée du dispositif peut être obtenue directement par au moins un capteur de déplacement apte à mesurer le déplacement du patin de poussée du dispositif. Ainsi, lorsque le patin de poussée est mis en mouvement du fait de la pression exercée sur le vérin de poussée, le capteur de déplacement est apte à obtenir une mesure de ce mouvement, par une mesure d'un paramètre tel que par exemple, et non limitativement, la vitesse de déplacement et/ou la durée du déplacement du patin de poussée ou encore la variation du volume d'huile injectée dans le vérin de poussée, etc.

Dans un mode de réalisation, la portion de conduite est réalisée dans un matériau donné et le dispositif comporte une mémoire apte à stocker au moins un seuil de pression maximale, le seuil de pression maximale dépendant au moins du matériau donné de la portion de conduite,
et dans lequel le seuil est obtenu pour une pression exercée sur le vérin de poussée inférieure ou égale audit seuil de pression maximale de la portion de conduite.

En effet, lorsqu'une pression (de poussée) croissante est exercée sur le vérin de poussée de la structure de mesure, la pression de contact exercée sur la surface intérieure de la portion de conduite par le patin de poussée augmente également, jusqu'à conduire à atteindre une contrainte maximale supportée par la portion de conduite, au-delà de laquelle la portion de conduite risque une dégradation irréversible. La valeur d'une telle contrainte maximale dépend notamment des propriétés physiques de la conduite comme ses matériaux et plus précisément leur limite d'élasticité, leur coefficient de Poisson ou encore leur module d'élasticité. Une telle contrainte maximale dépend également des propriétés géométriques de la conduite comme sa forme, ses dimensions et son épaisseur entre autres. La contrainte maximale supportée par une portion de conduite dépend donc des caractéristiques de ladite portion de conduite et peut donc être calculée au préalable. La pression de poussée exercée sur le vérin de poussée de la structure de mesure entraînant une telle contrainte maximale sur la portion de conduite correspond alors au troisième seuil défini précédemment, à savoir le seuil de pression maximale exercée sur le vérin de poussée. À l'instar de la contrainte maximale supportée par une portion de conduite, le seuil de pression maximale est calculable au préalable et dépend des mêmes caractéristiques de la portion de conduite.

Un tel seuil de pression maximale peut alors être stocké en mémoire par le dispositif de sorte à arrêter la mise en pression du vérin de poussée lorsque la pression mesurable reçue atteint sensiblement le seuil de pression maximale. En variante, le seuil de pression maximale peut être stocké en mémoire de l'organe de mise en pression et comparé à la valeur mesurée de la pression exercée sur le vérin de poussée.

Ainsi, dans un tel mode de réalisation, le seuil détecté par le dispositif correspond au troisième seuil défini précédemment, c'est-à-dire au seuil de pression maximale. La pression exercée sur le vérin de poussée est donc mesurée et pilotée de telle sorte qu'elle n'excède pas le seuil de pression maximale.

Dans un mode de réalisation, la portion de conduite étant de forme cylindrique et caractérisée par au moins un diamètre et le dispositif comportant une mémoire apte à stocker au moins un seuil de déformation maximale de la portion de conduite, ledit seuil de déformation maximale dépendant au moins du diamètre de la portion de conduite, le seuil est inférieur ou égal au seuil de déformation maximale de sorte que la déformation radiale de la portion de conduite induite par ladite pression exercé sur le vérin de poussée (1121) n'excède pas le seuil de déformation maximale.

En effet, le seuil détecté correspond, dans ce mode de réalisation, au deuxième seuil défini précédemment, à savoir au seuil de déformation maximale, lié à une limite de déformation de la conduite. Il s'agit ici d'une déformation maximale supportée par la conduite, au-delà de laquelle la conduite risque de se déformer de façon irréversible. Le seuil de déformation maximale de la conduite, dépend du dimensionnement de la conduite comme son diamètre et son épaisseur entre autres.

Le seuil détecté correspond alors à un seuil de déformation maximale atteint pour la portion de conduite considérée. La déformation radiale induite par la mise en pression du dispositif ne doit alors pas excéder le seuil de déformation maximale.

Le seuil de déformation maximale est une valeur calculable au préalable et mise à disposition du dispositif par stockage dans une mémoire du dispositif, ce qui permet l'arrêt de la mise en poussée du vérin de poussée par le dispositif lorsque la déformation radiale induite mesurée atteint le seuil de déformation maximale. En variante, le seuil de déformation maximale peut être mis à disposition d'un organe de contrôle apte à obtenir à la fois des mesures de la pression exercée sur le vérin de poussée et des mesures de la déformation radiale induite, de sorte que le pilotage de la pression exercée sur le vérin de poussée peut être arrêté par instruction de l'organe de contrôle dès que la mesure de déformation radiale atteint sensiblement le seuil de déformation maximale.

Dans un mode de réalisation, l'augmentation de la pression exercée sur le vérin de poussée du dispositif induit une augmentation proportionnelle (à une première approximation) de la déformation radiale de la portion de conduite jusqu'à un seuil de contact correspondant à une situation de contact entre une surface extérieure de la portion de conduite avec la paroi rigide, ce seuil de contact étant atteint sur détection d'une variation de déformation radiale moindre malgré une augmentation constante de pression exercée sur le vérin de poussée. Le seuil détecté est alors supérieur ou égal au seuil de contact.

En effet, lorsque la seule interaction de la portion de conduite correspond à l'interaction entre la surface intérieure de la conduite et le patin de poussée du dispositif, la pression exercée sur la portion de conduite et la déformation radiale induite sont proportionnelles jusqu'à un certain point. Comme évoqué précédemment, ce point peut correspondre au deuxième et/ou au troisième seuil, à savoir à une limite de déformation ou de pression liée à aux propriétés physiques et dimensionnelles de la conduite. Ce point peut également correspondre, comme décrit ici, à une situation dans laquelle la déformation radiale induite par la pression - et donc l'allongement correspondant - a parcouru le jeu mécanique existant entre la surface extérieure de la portion de conduite et la paroi rigide l'entourant.

En termes de mesures, ce point est alors atteint pour une déformation radiale devenant moindre malgré une augmentation constante de la pression exercé. On entend par une déformation radiale devenue « moindre », une situation dans laquelle la pression exercée continue d'augmenter de façon constante (donc avec une même vitesse d'augmentation) mais n'induit plus une augmentation constante de la déformation. C'est notamment le cas lorsque la déformation radiale commence à être en contact avec la paroi rigide et subit alors une résistance mécanique de la paroi rigide.

Le seuil détecté évoqué précédemment correspond alors, dans ce mode de réalisation, au premier seuil défini précédemment, à savoir le seuil de contact, qui est lié à une situation de contact entre la conduite dans cette portion prédéfinie et la paroi rigide. Le premier seuil est un seuil minimal à atteindre par le dispositif. Autrement dit, le dispositif continue d'exercer une pression sur la portion de conduite jusqu'à au moins détecter un contact entre cette dernière et la paroi rigide l'entourant de sorte à évaluer le jeu mécanique existant entre la portion de conduite et la paroi rigide.

Dans un mode de réalisation, le dispositif est agencé pour estimer un rapport d'allongement liant la pression exercée et la déformation radiale induite par cette pression exercée, en fonction de données de mesures reçues au moins de l'appareillage de mesure et de l'organe de mise en pression respectivement. Le seuil de contact est alors déterminé comme atteint lorsque le rapport d'allongement devient supérieur à une valeur prédéfinie.

La proportionnalité existant entre la pression exercée et la déformation radiale induite peut se traduire par une pente sensiblement constante d'une courbe représentant la pression exercé en fonction de la déformation induite. La valeur d'une telle pente correspond au rapport d'allongement décrit précédemment. Le traçage d'une telle courbe, appelée courbe de pression-déformation (ou de contrainte-déformation) est possible par des mesures de pression exercée, obtenues via l'organe de mise en pression du dispositif et des mesures de déformation radiale induite, obtenues via l'appareillage de mesure du dispositif. Le seuil de contact se traduit alors par un rapport d'allongement devenant supérieur à une valeur prédéfinie, la valeur prédéfinie correspondant ici au coefficient de proportionnalité entre l'augmentation de pression et l'augmentation de la déformation radiale.

Le rapport d'allongement est calculé à partir des mesures de pression et de déformation obtenues respectivement de l'organe de mise en pression et de l'appareillage de mesure du dispositif. Ce calcul est effectué par un processeur d'un circuit de traitement intégré au dispositif. En variante, ce calcul peut être effectué par un circuit de traitement intégré à un organe de contrôle situé à distance du dispositif et pilotant la mise en poussée de la structure de mesure du dispositif.

Dans un mode de réalisation, la pression exercée sur le vérin de poussée du dispositif est relâchée si un élément parmi le seuil de pression maximale et le seuil de déformation maximale est atteint avant d'atteindre le seuil de contact de la portion de conduite, afin de ne pas risquer de détériorer la conduite.

En effet, en pratique, la situation de contact entre la portion de conduite et la paroi rigide a lieu avant que la conduite n'atteigne une limite de pression ou de déformation maximale. Il est alors possible de continuer à déformer la portion de conduite dans sa zone d'élasticité, sans donc la détériorer, après détection du seuil de contact en continuant d'augmenter la pression exercé sur la portion de conduite. À ce stade, la pression exercée correspond à une pression exercée sur l'ensemble formé par la portion de conduite et la paroi rigide, ces deux éléments ayant atteint une situation de contact. La mise en pression est alors arrêtée lorsqu'un seuil parmi le seuil de pression maximale ou le seuil de déformation maximale est atteint. Cette condition d'arrêt de la mise en pression est également respectée dans le cas où un seuil parmi le seuil de pression maximale et le seuil de déformation maximale est atteint avant que le contact entre la portion de conduite et la paroi rigide n'ait lieu, comme décrit ici, de sorte d'éviter tout déformation irréversible de la conduite.

Selon un autre aspect tel que défini dans la revendication indépendante 13, il est proposé un procédé de mesure d'un jeu mécanique entre une conduite déformable et une paroi rigide, ce procédé étant mis en œuvre par un dispositif de mesure de jeu mécanique comprenant au moins un chariot porteur agencé :

- pour se déplacer à l'intérieur de la conduite jusqu'à une portion de la conduite, de position prédéfinie, et
- pour porter une structure de mesure comprenant au moins un vérin de poussée relié à un patin de poussée, le patin de poussée étant conformé pour prendre appui sur un élément de surface intérieure de la portion de conduite.

Le procédé de mesure consiste à :

a) relever une position axiale du chariot porteur correspondant à la position prédéfinie de la portion de conduite par rapport à une position axiale d'origine prédéfinie,

b) relever une position radiale de la structure de mesure sur la portion de conduite par rapport à une position radiale d'origine prédéfinie,

c) exercer une pression initiale sur le vérin de poussée, pour mettre en contact le patin de poussée sur l'élément de surface intérieure de la portion de conduite et relever ladite pression initiale,

d) exercer une pression sur le vérin de poussée de sorte à induire une déformation radiale sur la portion de conduite et relever au moins la pression associée à la déformation radiale induite par ladite pression,

e) réitérer l'étape d) en augmentant la pression exercé sur le vérin de poussée et relever, à chaque itération, au moins la pression exercée jusqu'à atteindre un seuil.

Selon un autre aspect de l'invention tel que défini dans la revendication 14, il est proposé une application du procédé de mesure décrit précédemment pour la détermination d'une tenue mécanique d'une conduite soumise à une pression hydraulique dans laquelle la conduite est une conduite d'installation hydraulique et la paroi rigide est une paroi rocheuse et/ou bétonnée.

Selon un autre aspect de l'invention tel que défini dans la revendication 15, il est proposé un programme informatique comportant des instructions pour la mise en œuvre du procédé décrit précédemment, lorsque ces instructions sont exécutées par un circuit de traitement d'un dispositif selon le premier aspect de l'invention.

En effet, le procédé est exécuté par un circuit de traitement intégré au dispositif. En variante, un tel circuit de traitement peut être intégré à un système de contrôle à distance du dispositif et dans ce cas, les données obtenues par le dispositif de mesure sont alors transmises au système de contrôle.

**Brève description des dessins**

D'autres caractéristiques, détails et avantages apparaîtront à la lecture de la description détaillée ci-après, et à l'analyse des dessins annexés, sur lesquels :

**Fig. 1**

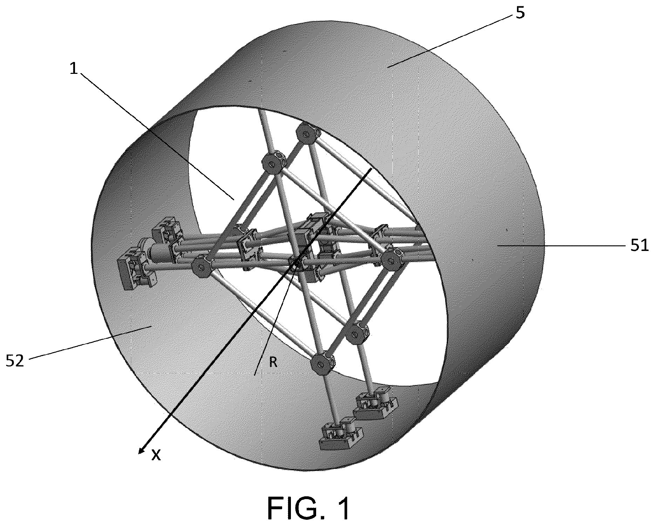

[Fig. 1] montre la structure générale d'un mode de réalisation du dispositif à l'intérieur d'une conduite.

**Fig. 2**

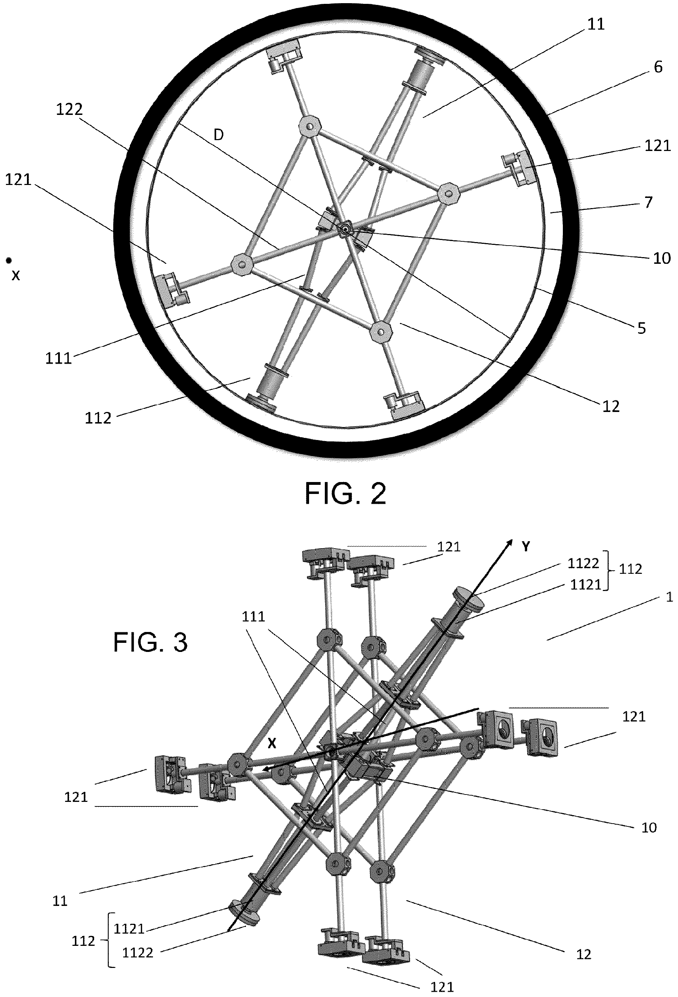

[Fig. 2] montre la structure générale d'un mode de réalisation du dispositif à l'intérieur d'une conduite.

**Fig. 3**
[Fig. 3] montre la structure générale d'un mode de réalisation du dispositif.

**Fig. 4**

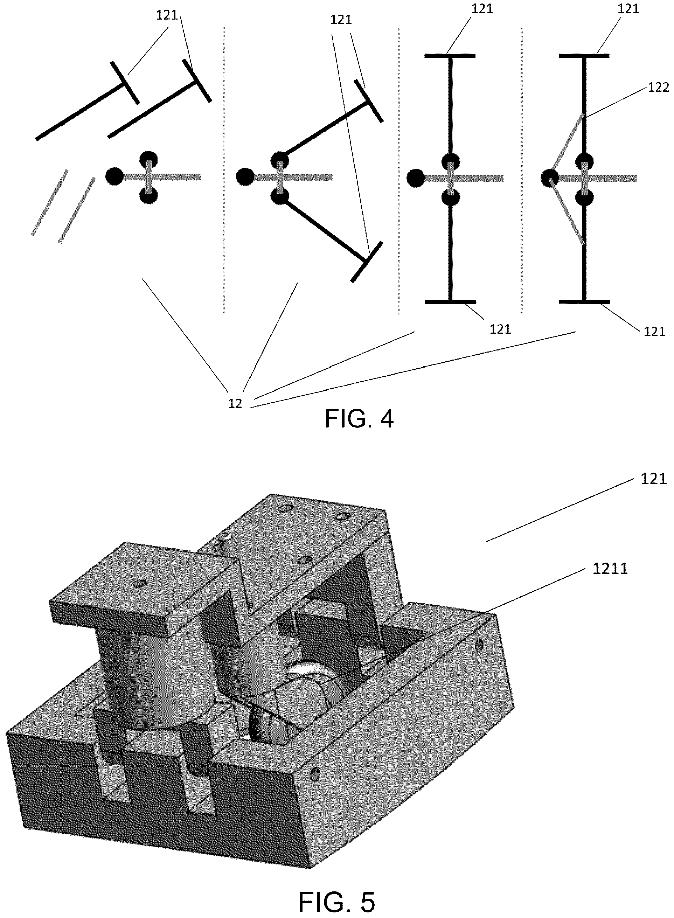

[Fig. 4] montre un chariot porteur articulé du dispositif selon un mode de réalisation.

**Fig. 5**
[Fig. 5] montre une extrémité d'un chariot porteur du dispositif selon un mode de réalisation.

**Fig. 6**

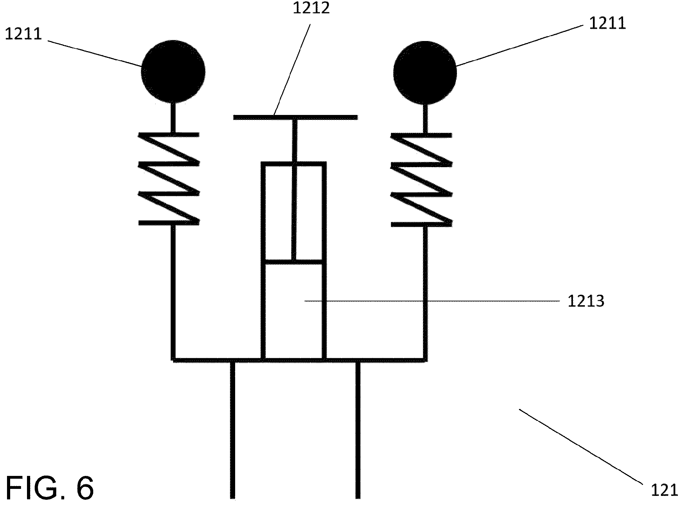

[Fig. 6] montre une extrémité d'un chariot porteur du dispositif selon un mode de réalisation.

**Fig. 7**

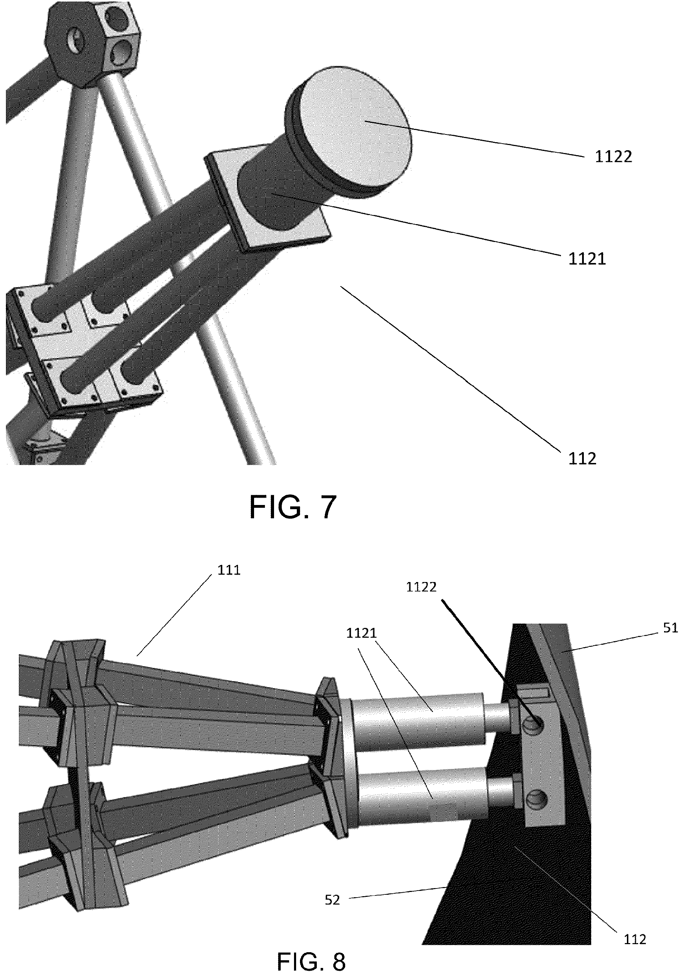

[Fig. 7] montre une extrémité d'une structure de mesure du dispositif selon un mode de réalisation.

**Fig. 8**
[Fig. 8] montre une extrémité d'une structure de mesure du dispositif selon un mode de réalisation.

**Fig. 9**

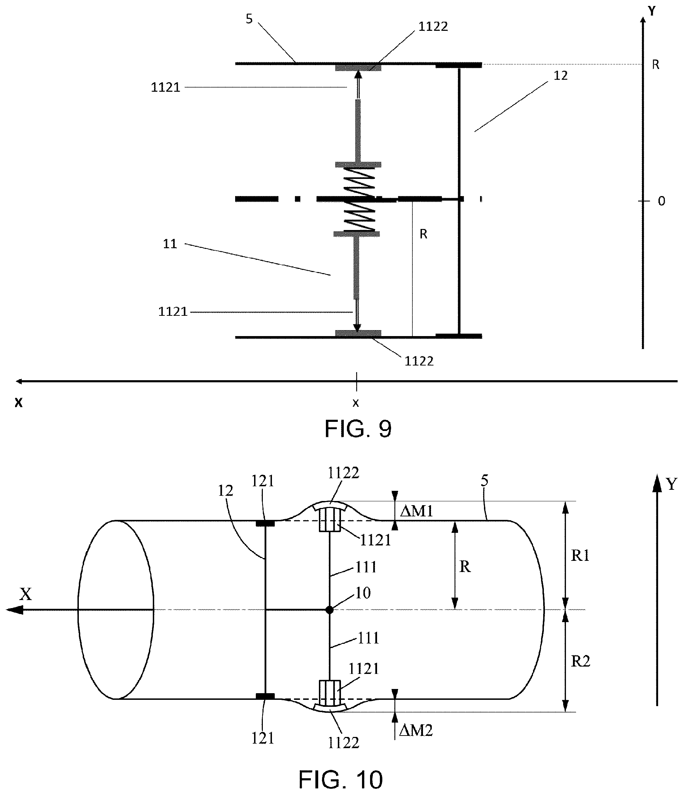

[Fig. 9] montre une mise en contact d'une structure de mesure du dispositif sur une portion de conduite selon un mode de réalisation.

**Fig. 10**
[Fig. 10] montre une mise en pression et mesure d'une structure de mesure du dispositif sur une portion de conduite selon un mode de réalisation.

**Fig. 11**

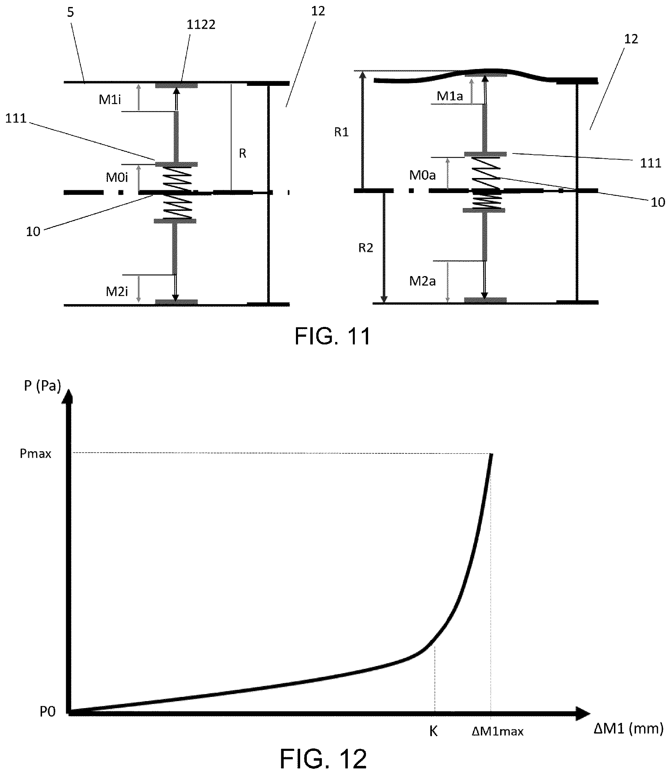

[Fig. 11] montre une mise en pression et mesure d'une structure de mesure du dispositif sur une portion de conduite selon un mode de réalisation.

**Fig. 12**
[Fig. 12] montre une courbe de pression-déformation d'une portion de conduite selon un mode de réalisation.

**Fig. 13**

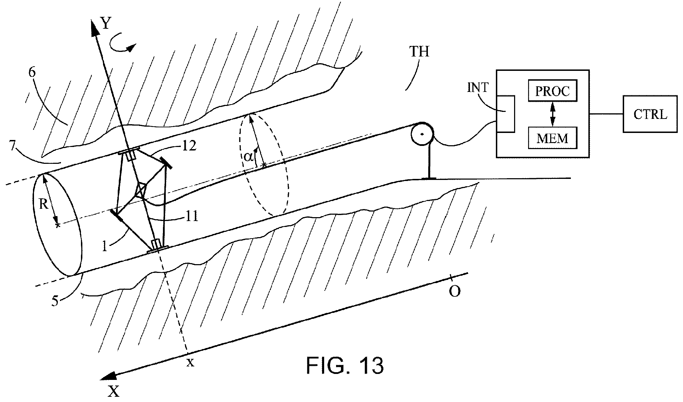

[Fig. 13] montre un contexte d'utilisation du dispositif selon un mode de réalisation.

**Fig. 14**

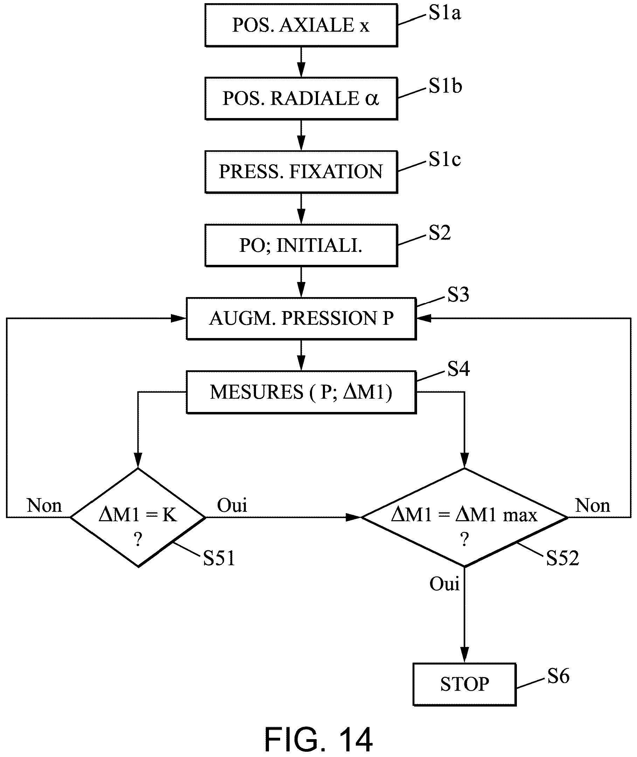

[Fig. 14] montre un procédé de mesure selon un mode de réalisation de l'invention.

**Description des modes de réalisation**

Il est maintenant fait référence aux Figures 1 et 2. Les Figures 1 et 2 représentent un dispositif 1 pour mesurer un jeu mécanique 7 entre une conduite 5 et une paroi rigide 6. Les Figures 1 et 2 représentent différentes vues d'une portion de conduite 5 dans laquelle est positionné le dispositif 1. La conduite 5 présente classiquement un ou plusieurs trous d'homme TH (représentés sur la Figure 13) localisés en des positions prédéterminées de la conduite 5 et permettant au dispositif 1 d'accéder à l'intérieur de la conduite 5. Dans une variante du trou d'homme TH représenté sur la figure 13, des trous d'homme peuvent classiquement correspondre, dans les conduites forcées, à des trappes circulaires ayant des diamètres de l'ordre de 500 millimètres et localisés en des positions prédéterminées tout au long d'une surface extérieure 51 de la conduite 5. De tels trous d'homme seront considérés dans le contexte de la présente description.

Dans l'exemple décrit ici, la portion de conduite 5 est de forme cylindrique et on définit un axe de révolution X de la portion de conduite 5. La portion de conduite 5 est caractérisée par un diamètre D ou un rayon R. Pour des installations hydrauliques, les conduites peuvent avoir des diamètres D de plusieurs mètres. La conduite 5 est constituée d'acier. En variante, la conduite 5 peut être constituée de matière métallique ou synthétique (PVC), ou plus généralement d'un matériau étanche à l'eau et présentant des propriétés de déformation élastique. Une conduite 5 relie classiquement un réservoir d'eau, comme un barrage par exemple, aux turbines d'une centrale hydroélectrique. Dans le contexte de la présente description, la conduite 5 est installée dans une galerie souterraine en charge par forage, encastrée dans un massif rocheux. En variante, la conduite 5 peut être installée dans un puit, de sorte que la conduite 5 est inclinée et que l'eau s'écoule à l'intérieur de la conduite 5 par gravité (comme illustré sur la Figure 13). L'espace entre une surface extérieure 51 de la conduite 5 et le massif rocheux est partiellement comblé par coulage de béton, de sorte que la surface extérieure 51 de la conduite 5 est entourée d'une paroi rigide 6, la paroi rigide 6 étant constituée d'un revêtement bétonné et/ou rocheux. Il existe classiquement des jeux mécaniques 7 entre la surface extérieure 51 de la conduite 5 et une telle paroi rigide 6 comme illustré sur les Figure 2 et 13. Ces jeux mécaniques 7 correspondent à des zones d'espace, en général de plusieurs millimètres, dans lesquelles la conduite 5 peut gonfler et se déformer lorsqu'elle est soumise à une forte pression hydraulique. Ces jeux mécaniques 7 sont a priori variables d'un point de la conduite 5 à un autre. En fonction notamment des pressions exercées, des caractéristiques de la paroi rigide 6 et des caractéristiques de la conduite 5 comme ses matériaux, son diamètre D ou encore son épaisseur, un gonflement ou une déformation trop importante de la conduite 5 peut résulter en une fracturation hydraulique de la conduite 5, conduisant à des fissures se propageant et créant d'importantes fuites d'eau sous pression à travers le massif rocheux.

Le dispositif 1 comporte un chariot porteur 12 et une structure de mesure 11. Un tel dispositif 1 est détaillé sur les Figures 2 et 3. Le chariot porteur 12 comprend au moins deux extrémités opposées 121, ces extrémités opposées 121 étant conformées pour être en contact avec une surface intérieure 52 de la portion de conduite 5. Une longueur hors-tout du chariot porteur 12 peut alors être définie comme la distance entre ses extrémités opposées 121, cette distance correspond au moins au diamètre D de la portion de conduite 5. Les extrémités 121 du chariot porteur 12 sont reliées l'une à l'autre par un corps 122 du chariot porteur 12. Dans l'exemple décrit ici, le corps 122 correspond à un bras mécanique 122, qui est une tige en acier ou en variante, en métal. Le corps 122 du chariot porteur 12 est ajustable en longueur de sorte à s'adapter au diamètre D de la portion de conduite 5 et est optionnellement articulé, de sorte que le chariot porteur 12 peut être mécaniquement ou manuellement replié et déplié. Le caractère articulé du chariot porteur 12 est illustré sur la Figure 4 et permet notamment d'insérer le chariot porteur 12 replié à l'intérieur de la conduite 5 via les trous d'homme de la conduite 5 pour ensuite déplier le chariot porteur 12 à l'intérieur de la conduite 5.

Dans l'exemple décrit ici et illustré par la Figure 3, le chariot porteur 12 déplié est constitué de huit extrémités 121 reliés deux à deux par quatre bras mécaniques 122, les bras 122 étant parallèles deux à deux de sorte que le chariot porteur 12 est « en croix » à l'intérieur de la portion de conduite 5. Optionnellement, les bras mécaniques 122 du chariot porteur 12 peuvent être maintenus entre eux, une fois dépliés, par des barres de maintien. Une fois le chariot porteur 12 déplié et positionné à l'intérieur de la conduite 5, les extrémités 121 du chariot sont alors en contact avec des éléments de surface opposés deux à deux de la surface intérieure 52 de la portion de conduite 5. En variante, le nombre de bras 122 et d'extrémités 121 du chariot porteur 12 peut être adapté pour consolider l'appui du chariot porteur 12 en démultipliant les surfaces de contact du chariot porteur 12 sur la surface intérieure 52 de la portion de conduite 5.

Les extrémités 121 du chariot porteur 12 sont détaillées sur les Figures 5 et 6. Chaque extrémité 121 du chariot porteur 12 est pourvu de roues 1211. Ces roues 1211 sont optionnellement montées sur un système de rappel comme des ressorts, comme représenté sur la Figure 6. Les roues 1211 du chariot porteur 12 sont conformées pour être mises en contact avec la surface intérieure 52 de la portion de conduite 5 lorsque le chariot porteur 12 est déplié. Les roues 1211 sur chacune des extrémités 121 du chariot porteur 12 permettent au dispositif 1 de se déplacer à l'intérieur de la conduite 5 par contact direct des roues 1211 avec la surface intérieure 52 de la portion de conduite 5. Chaque extrémité 121 du chariot porteur 12 comporte en outre un patin de fixation 1212 monté sur un vérin de fixation 1213. Lorsque le chariot porteur 12 se déplace sur la surface intérieure 52 de la conduite 5, le patin de fixation 1212 est dans un mode dit « replié » de sorte que le patin de fixation 1212 n'a aucun contact avec la surface intérieure 52 de la conduite 5. L'arrêt du chariot porteur 12 au niveau d'une portion de conduite 5 est rendu possible par une mise en pression du vérin de fixation 1213 conduisant à un déplacement du patin de fixation 1212 jusqu'à un mode « déplié » du patin de fixation 1212, correspondant à sa mise en contact avec un élément de surface intérieure de la portion de conduite 5. Le patin de fixation 1212 présente une surface courbe définie par un ou plusieurs rayons de courbure de sorte à prendre la forme de l'élément de surface intérieure 52 de la portion de conduite 5 sur lequel le patin de poussée 1122 prend appui. La mise en pression du vérin de fixation 1213 correspond à un pilotage d'une pression exercée sur le vérin de fixation 1213, la pression exercée étant suffisante pour aligner les roues 1211 et le patin de poussée 1212 sur chaque extrémité du chariot porteur 12. Un tel pilotage de la pression exercée sur le vérin de fixation 1213 sera détaillé plus tard. La pression exercée sur le vérin de fixation 1213 conduit le patin de fixation 1212 à prendre appui sur la surface intérieure 52 de la portion de conduite 5, de sorte à bloquer le chariot porteur 12 au niveau de la portion de conduite 5. Dans l'exemple décrit sur les Figures 1, 2 et 3, le chariot porteur 12 du dispositif 1 comprend huit patins de fixation 1212 respectivement intégrés aux huit extrémités 121 des bras mécaniques 122 du chariot porteur 12. Le chariot porteur 12 a donc une fonction de convoyage - liée aux roues 1211 - et d'immobilisation - liée au patin 1212 et au vérin de fixation 1213 - du dispositif 1 à l'intérieur de la conduite 5.

Le dispositif 1 comprend en outre une structure de mesure 11, la structure de mesure 11 étant elle-même composée d'une première partie 111 en contact avec le chariot porteur 12 et d'une deuxième partie 112 apte à prendre appui sur un élément de surface intérieure 52 de la portion de conduite 5.

La première partie 111 de la structure de mesure 11 est reliée au chariot porteur 12 de sorte que la structure de mesure 11 est montée mobile en rotation par rapport au chariot porteur 12 selon l'axe de révolution X de la portion de conduite 5 dans laquelle se situe le dispositif 1. Dans un mode de réalisation, la première partie 111 de la structure de mesure 11 peut être reliée au chariot porteur 12 par l'intermédiaire d'un organe de liaison 10, l'organe de liaison 10 étant solidaire de la première partie 111 de la structure de mesure 11. La rotation de la structure de mesure 11 par rapport au chariot porteur 12 selon l'axe X est alors rendue possible par une liaison pivot donnée par l'organe de liaison 10. Pour une position donnée x du chariot porteur 12 sur l'axe X, la structure de mesure 11 peut évoluer selon un axe Y perpendiculaire à l'axe X comme représenté sur la Figure 3. Cet axe Y sera appelé « axe radial » ou « axe de poussée radiale » par la suite.

Optionnellement, l'organe de liaison 10 peut présenter une liaison souple de sorte que l'organe de liaison 10 (et donc la première partie de la structure de mesure 11) peut translater selon l'axe de poussée radiale Y perpendiculaire à l'axe X. Cette translation est de l'ordre de quelques millimètres. Comme représenté sur la Figure 2, l'organe de liaison 10 est, par défaut, positionné au milieu du diamètre D de la portion de conduite 5. En présentant une liaison souple, l'organe de liaison 10 peut alors être décalé de cette position par défaut. Ce décalage de l'organe de liaison 10 sera détaillé plus tard.

En variante, la première partie 111 de la structure de mesure 11 peut également translater selon l'axe de révolution X de la portion de conduite 5 ou selon l'axe radial Y, la translation étant de l'ordre de quelques millimètres. Une telle translation selon l'axe de poussée radiale Y est envisageable notamment dans le cas où les jeux mécaniques 7 de part et d'autre d'une portion de conduite sont différents, la première partie 111 de la structure de mesure 11 translatant alors selon l'axe de poussée radial Y vers l'élément de surface intérieure 52 de la portion de conduite 5 présentant un jeu mécanique 7 plus important par rapport à l'élément de surface intérieure 52 qui lui est opposé dans la portion de conduite 5.

La deuxième partie 112 de la structure de mesure 11, dont des modes de réalisation sont détaillés sur les Figures 7 et 8, est composée d'un patin de poussée 1122 conformé pour prendre appui sur l'élément de surface intérieure 52 de la portion de conduite 5. Le patin de poussée 1122 peut présenter, à l'instar du patin de fixation 1212, une surface courbe définie par un ou plusieurs rayons de courbure de sorte à prendre la forme de l'élément de surface intérieure 52 de la portion de conduite 5 sur lequel le patin de poussée 1122 prend appui. Optionnellement, le patin de poussée 1122 peut présenter un revêtement antidérapant.

La deuxième partie 112 de la structure de mesure 11 comprend en outre au moins un vérin de poussée 1121, le vérin de poussée 1121 étant relié au patin de poussée 1122. Le vérin de poussée 1121 de la structure de mesure 11 est apte à recevoir une pression de la part d'un organe de mise en pression et à convertir cette pression reçue en une force mécanique exercée, via le patin de poussée 1122, sur un élément de surface intérieure 52 de la portion de conduite 5. Lorsque le vérin de poussée 1121 est mis en pression, le patin de poussée 1122 est alors en appui sur la surface intérieure 52 de la portion de conduite 5 en des points localisés de la surface intérieure 52 de la portion de conduite 5 appelés des « points de poussée ». Le patin de poussée 1122 exerce une force mécanique sur la surface intérieure 52 de la portion de conduite 5 de sorte à induire une pression de contact et donc une déformation radiale ΔM1 sur la portion de conduite 5. La structure de mesure 11 du dispositif 1 permet alors une mise en poussée de la portion de conduite 5, de sorte à déformer radialement et localement la portion de conduite 5. Cette déformation radiale ΔM1 sera détaillée plus tard.

La structure de mesure 11 comprend par ailleurs un appareillage de mesure (non représenté sur les figures) de sorte que le dispositif 1 est capable de mesurer la déformation radiale ΔM1 induite sur la portion de conduite 5. L'appareillage de mesure peut prendre la forme de capteurs de déplacement disposés sur le patin de poussée 1122 et/ou sur la première partie 111 de la structure de mesure 11 de sorte à obtenir des mesures des déplacements respectifs du patin de poussée 1122 et/ou de la première partie 111 de la structure de mesure 11 (notamment en mesurant le décalage de l'organe de liaison 10 par rapport au chariot porteur 12 par exemple). En variante, l'appareillage de mesure peut correspondre à un appareillage solidaire du chariot porteur 12 et obtenant des mesures de distance entre le centre de la portion de conduite 5 et chaque élément de surface intérieure de la portion de conduite 5 par transmission et réception déphasées d'ondes acoustiques ou électromagnétiques par exemple. La mise en pression du vérin de poussée 1121 et l'exploitation des mesures de la déformation radiale ΔM1 induite dans la portion de conduite 5 seront détaillées dans la description des figures suivantes.

Dans l'exemple décrit ici et illustré par les Figures 1 à 3, la structure de mesure 11 comprend deux patins de poussée 1122 mis en opposition de sorte que lorsque les patins de poussée sont mis en contact avec deux éléments de surface opposés de la surface intérieure 52 de la portion de conduite 5, une longueur hors-tout de la structure de mesure 11 correspondant au diamètre D de la portion de conduite 5. La première partie 111 de la structure de mesure 11 s'apparente à deux assemblages pyramidaux accolés par leur base et reliés par l'organe de liaison 10. Un tel organe de liaison 10 peut être décalé de quelques millimètres sur l'axe radial Y formé par les deux patins de poussée 1122 mis en opposition. Le patin de poussée 1122 peut prendre une forme surfacique rectangulaire ou de disque comme illustrées respectivement sur les Figures 7 et 8. Cette forme surfacique ainsi que le revêtement du patin de poussée 1122 peuvent être choisis selon les propriétés physiques et géométriques de la conduite 5. Chaque patin de poussée 1122 est relié à un vérin de poussée 1121 correspondant à un tube cylindrique dans lequel un piston sépare le volume du tube cylindrique en deux chambres isolées. Un tel vérin de poussée 1121 est similaire au vérin de fixation 1213 représenté sur la Figure 6. En variante, le patin de poussée 1122 peut être relié à plusieurs vérins consistant en plusieurs tubes cylindriques, de sorte à répartir la pression exercée dans plusieurs vérins de poussée 1121 et à limiter le poids de chaque élément, comme illustré par la Figure 8. Dans l'exemple décrit ici, la mise en pression des vérins de poussée 1121 est effectuée de façon indépendante (donc a priori par deux flux de pression réglables distincts) pour chaque vérin de poussée 1121 de la structure de mesure 11. En variante, deux vérins de poussée 1121 sur le même axe radial Y et agissant sur des éléments de surface opposés de la surface intérieure 52 de la portion de conduite 5 peuvent être mis en pression par un seul flux de pression provenant d'un organe de mise en pression, de sorte que le flux de pression est réparti sur chaque vérin de poussée 1121. Dans ce mode de réalisation, la liaison souple de l'organe de fixation 10 permet notamment de considérer les déséquilibres entre des points de poussée sur des éléments de surface opposés de la surface intérieure 52 de la portion de conduite 5 par déplacement de la première partie 111 de la structure de mesure 11, de tels déséquilibres étant liés par exemple à des différences de jeux mécaniques 7 en ces éléments de surface opposés.

La structure de mesure 11 a donc une fonction de mise en pression - liée aux vérin 1121 et patin de poussée 1122 ainsi qu'à l'organe de mise en pression - de la portion de conduite 5 et de mesure de la déformation $\Delta M1$ induite par cette mise en pression - liée à l'appareillage de mesure -.

En variante, la structure de mesure 11 présente plus de deux patins de poussée 1122 (et donc plus de deux vérins de poussée 1121), toujours en nombre pair préférentiellement, de sorte à exercer une pression équirépartie sur l'ensemble de la portion de conduite 5 et à reproduire une pression hydrostatique, équivalente à une mise en eau de la conduite 5.

Il est maintenant fait référence à la Figure 9. La Figure 9 représente une mise en contact du patin de poussée 1122 de la structure de mesure 11 sur un élément de surface intérieure 52 d'une portion de conduite 5. Dans l'exemple décrit ici, la structure de mesure 11 comprend deux patins de poussée 1122 solidaires et mis en opposition, fonctionnant de façon similaire. Dans le mode de réalisation de la Figure 9, le dispositif 1 est situé au niveau d'une portion de la conduite 5, la portion de conduite 5 ayant une position prédéfinie x sur l'axe de révolution X de la portion de conduite 5. Le chariot porteur 12 du dispositif 1 (et donc l'ensemble du dispositif 1) est immobilisé sur la portion de conduite 5 par blocage des patins de fixation 1212 sur des éléments de la surface intérieure 52 de la portion de conduite 5. La structure de mesure 11 est positionnée selon un axe radial Y prédéfini. Les vérins de poussée 1121 de la structure de mesure 11 reçoivent alors une pression P0, la mise en pression des vérins de poussée 1121 entraînant un déplacement des patins de poussée 1122, initialement sans contact avec la surface intérieure 52 de la portion de conduite 5, de sorte à prendre appui sur un élément de surface intérieure 52 de la portion de conduite 5. Le dispositif est alors à un « point d'initialisation » de la mesure, qui correspond à une pression P0 exercée sur les vérins de poussée 1121 de sorte à mettre en contact la structure de mesure 11 et la surface intérieure de la portion de conduite 5 (et ce pour une portion de conduite 5 de position x et pour un axe radial Y donnés), sans exercer de pression de contact sur la portion de conduite 5 à ce stade.

Il est maintenant fait référence aux Figures 10 et 11. Une fois les patins de poussée 1122 mis en contact avec la surface intérieure 52 de la portion de conduite 5 de sorte à atteindre le point d'initialisation de la mesure comme illustré sur la Figure 10, les vérins de poussée 1121 de la structure de mesure 11 reçoivent une pression P croissante de sorte que la pression exercée sur les vérins de poussée 1121 augmente. L'augmentation de la pression (de poussée) P sur les vérins de poussée 1121 induit alors une pression de contact exercée par les patins de poussée 1122 et donc une déformation radiale $\Delta M1$, $\Delta M2$ de la portion de conduite 5 comme illustré par la Figure 10. La pression de contact exercée par les patins de poussée 1122 sur la surface intérieure 52 de la portion de conduite 5 est a priori différente de la pression P reçue par les vérins de poussée 1121 et non uniforme sur l'ensemble de la surface des patins de poussée 1122 en contact avec la portion de conduite 5. La déformation radiale $\Delta M1$, $\Delta M2$ de la portion de conduite 5 correspond à un allongement de la portion de conduite 5 selon l'axe radial Y, de sorte que les rayons locaux R1, R2 de la portion de conduite 5 au niveau des points de poussée de la structure de mesure 11 du dispositif 1 sont supérieurs au rayon naturel R de la portion de conduite 5. Dans l'exemple décrit ici, la mise en pression des deux vérins de poussée 1121 induit, via les deux patins de poussée 1122, des déformations radiales respectives $\Delta M1$ et $\Delta M2$ de part et d'autre de la portion de conduite 5, de sorte que les rayons localisés respectifs R1 et R2 de chaque côté de la portion de conduite 5 sont supérieurs à R. L'obtention des mesures $\Delta M1$, $\Delta M2$ (et donc R1, R2) sera détaillée dans la suite de la description. Par ailleurs, la déformation radiale induite ΔM1, ΔM2 par le dispositif de mesure 11 n'est pas symétrique de part et d'autre de la portion de conduite 5 (autrement dit, R1 et R2 ne sont pas égaux) du fait entre autres, de l'environnement extérieur de la portion de conduite 5 comme des différences de jeux mécaniques 7 de part et d'autre de la portion de conduite 5 mais également des aspérités présentes sur la surface de la portion de conduite 5.

Dans un mode de réalisation illustré par la Figure 10, la première partie 111 de la structure de mesure 11 est rattachée au chariot porteur 12 et possède un unique degré de liberté correspondant à une liaison pivot d'axe X. En particulier, la première partie 111 de la structure de mesure 11 ne présente pas de liaison souple selon l'axe radial Y, de sorte que lorsque les vérins de poussée 1121 sont mis en pression, seule la deuxième partie 112 de la structure de mesure 11 (à savoir les vérins 1121 et les patins de poussée 1122) est en mouvement. La déformation radiale ΔM1, ΔM2 est donc équivalente aux déplacements respectifs des patins de poussée 1122. Dans ce mode de réalisation, le dispositif 1 peut obtenir une mesure de la déformation radiale ΔM1, ΔM2 de la portion de conduite 5 par l'intermédiaire de capteurs de déplacement placés au niveau des patins de poussée 1122, les capteurs étant aptes à obtenir une mesure de position (ou en variante de déplacement) du patin de poussée 1122 à partir du point d'initialisation de la mesure.

Un autre mode de réalisation est illustré par la Figure 11. La partie gauche de la Figure 11 correspond à la Figure 10 pour laquelle le point d'initialisation de la mesure est effectué. Dans ce mode de réalisation, la première partie 111 de la structure de mesure 11 peut être reliée au chariot porteur 12 par l'intermédiaire d'un organe de liaison 10, l'organe de liaison 10 étant solidaire de la première partie 111 de la structure de mesure 11 et présentant une liaison souple, de sorte que l'organe de liaison 10 (et donc la première partie 111 de la structure de mesure 11) peut translater selon l'axe radial Y. Dans ce mode de réalisation, au point d'initialisation de la mesure (partie gauche de la Figure 11), les patins de poussée 1122 et la liaison souple de l'organe de liaison 10 ont fait un déplacement initial de M1i, M2i et M0i respectivement, un tel déplacement initial permettant de mettre les patins de poussée 1122 en contact avec des points de poussée de part et d'autre de la surface intérieure 52 de la portion de conduite 5. Lorsqu'une mise en pression croissante des vérins de poussée 1121 est effectuée, (partie droite de la Figure 11), les patins de poussée 1122 et la liaison souple de l'organe de liaison 10 ont fait un déplacement de M1a, M2a et M0a respectivement. Dans l'exemple décrit ici en Figure 11, la liaison souple de la structure de mesure 11 influence les déplacements des deux patins de poussée 1122 de sorte que les déformations radiales ΔM1, ΔM2 de part et d'autre de la portion de conduite 5 sont fonction à la fois des déplacements des patins de poussée 1122 et des déplacements de la première partie 111 de la structure de mesure 11 par rapport au chariot porteur 12, immobile. En référence à la Figure 11, les déformations radiales ΔM1, ΔM2 de la portion de conduite 5 sont alors données par :

[Math.1]

$$\Delta M1 = (M1a - M1i) + (M0a - M0i)$$

[Math.2]

$$\Delta M2 = (M2a - M2i) - (M0a - M0i)$$

Dans le mode de réalisation décrit par la Figure 11, de telles mesures de déformation radiale ΔM1, ΔM2 peuvent être obtenues au moyen de capteurs fixés d'une part, sur les patins de poussée 1122 (de sorte à obtenir les mesures de M1i, M2i, M1a et M2a) et d'autre part, sur l'organe de liaison 10 ou encore sur la première partie 111 de la structure de mesure 11 (de sorte à obtenir la mesure de M0i et M0a).

Une méthode alternative pour l'obtention des mesures de déformation radiale ΔM1, ΔM2 consiste à directement mesurer les rayons localisés R1 et R2 par l'intermédiaire d'un appareillage de mesure rattaché au chariot porteur 12 du dispositif 1. L'appareillage de mesure peut posséder un degré de liberté de rotation d'axe X par rapport au chariot porteur 12 par l'intermédiaire d'une tête tournante par exemple, de sorte que l'appareillage de mesure est positionné selon le même axe radial Y que la structure de mesure 11. Une mesure de distance entre le centre de la portion de conduite 5 et le points de poussée par émission et réception d'ondes sonores et/ou électromagnétiques permet alors d'obtenir les mesures R1 et R2. On a alors :

[Math.3]

$$\Delta M1 = R1 - R$$

[Math.4]

$$\Delta M2 = R2 - R$$

Il est maintenant fait référence à la Figure 12. La Figure 12 représente un graphique d'une courbe pression-déformation reliant, d'une part, l'évolution de la pression P exercée sur le vérin de poussée 1121 de la structure de mesure 11 du dispositif 1 et d'autre part, l'évolution de la déformation radiale $\Delta M1$ d'une portion de conduite 5 induite par la pression P exercée. On décrit ici la déformation radiale $\Delta M1$ pour un patin de poussée 1122 en contact avec un élément de surface intérieure 52 de la portion de conduite 5 mais un raisonnement similaire peut être appliqué pour la déformation radiale $\Delta M2$. L'obtention de telles mesures de pression et de déformation radiales par le dispositif 1 seront détaillées plus tard.

L'évolution de la pression P exercée sur le vérin de poussée 1121 est représentée sur l'axe des ordonnées et est exprimée en Pascals (Pa). Le graphique de la Figure 12 débute à une pression P = P0, correspondant à la pression du point d'initialisation de la mesure. Autrement dit, à P = P0, le patin de poussée 1122 est en contact avec la surface intérieure 52 de la portion de conduite 5 sur les points de poussée, sans exercer de pression de contact sur la portion de conduite 5 à ce stade. Une pression P croissante est alors exercée sur le vérin de poussée 1121, qui génère, à partir de la pression P reçue, une force mécanique croissante exercée par le patin de poussée 1122 sur la surface intérieure 52 de la portion de conduite 5. La pression P exercée induit alors, via l'action de l'extrémité 112 de la structure de mesure 11 (c'est-à-dire du vérin de poussée 1121 et du patin de poussée 1122), une pression et une déformation $\Delta M1$ croissante de la surface intérieure 52 de la portion de conduite 5. Cette déformation $\Delta M1$ se faisant selon l'axe radial Y, la déformation $\Delta M1$ est dite radiale (sous-entendu selon l'axe radial Y). La déformation radiale $\Delta M1$ induite par la pression P exercée est représentée sur l'axe des abscisses du graphique de la Figure 12 et est exprimée en millimètres (mm).

La déformation radiale $\Delta M1$ de la portion de conduite 5 induite via le patin de poussée 1122 est, dans un premier temps, proportionnelle à la pression P exercée sur le vérin de poussée 1121. Cette proportionnalité est représentée en Figure 12 par une pente de la courbe sensiblement constante sur une première partie du graphique. La valeur de cette première pente dépend, entre autres, des caractéristiques, notamment en matériaux, de la portion de conduite 5, comme par exemple le module de Young (ou module d'élasticité) ou encore le coefficient de Poisson du ou des matériaux constituant la portion de conduite 5. Cette évolution dans un premier temps de la courbe de la Figure 12 traduit, dans le contexte de la présente description, un allongement de la portion de conduite 5 selon l'axe radial Y. Cet allongement s'effectue en particulier sur le jeu mécanique 7 existant entre la portion de conduite 5 et la paroi rigide 6 jusqu'à atteindre le seuil de contact K, la détection d'un tel seuil se traduisant par un changement de la pente de la courbe de la figure 12 et correspondant à une situation particulière de la portion de conduite 5.

La courbe pression-déformation connaît un premier changement de pente lorsque la déformation $\Delta M1$ atteint le seuil de contact K, comme représenté sur la Figure 12. Dans le mode de réalisation décrit ici, ce seuil K correspond à une situation de contact entre la surface extérieure 51 de la portion de conduite 5 et la paroi rigide 6 entourant la conduite 5. Autrement dit, lorsque la déformation radiale $\Delta M1$ atteint le seuil de contact K, l'allongement de la portion de conduite 5 a parcouru la distance du jeu mécanique 7 présent entre la portion de conduite 5 et la paroi rigide 6. La paroi rigide 6 fait donc obstacle à la déformation radiale de la portion de conduite 5, ce qui se traduit par réduction de la vitesse de déformation radiale $\Delta M1$ sur la courbe de la Figure 12 malgré une augmentation continue de la pression P exercé sur le vérin de poussée 1121. En particulier, la valeur de déformation radiale $\Delta M1 = K$ correspond à une mesure du jeu mécanique 7 existant entre la portion de conduite 5 et la paroi rigide 6. Pour une conduite 5 de rayon R d'une installation hydraulique, les jeux mécaniques observables entre la conduite 5 et la paroi rigide 6 d'une galerie souterraine sont généralement de l'ordre de 10e-4*R.

Dans un mode de réalisation, après avoir atteint le seuil de contact K, la déformation radiale $\Delta M1$ peut, sous la poussée d'une pression P croissante exercé sur le vérin de poussée 1121, continuer à augmenter. Cette augmentation de la déformation radiale $\Delta M1$ après contact avec la paroi rigide 6 traduit notamment une déformation de l'ensemble formé par la portion de conduite 5 et la paroi rigide 6. L'augmentation de la déformation $\Delta M1$ de l'ensemble formé par la portion de conduite 5 et la paroi rigide 6 peut éventuellement atteindre un deuxième seuil $\Delta M1max$, Ledit deuxième seuil $\Delta M1max$, appelé ici « seuil de déformation maximale », correspond à une limite intrinsèque de déformation de la conduite 5 liée notamment à ses dimensions, son épaisseur et/ou ses matériaux, de sorte qu'une augmentation de la pression P exercée à ce stade conduirait à dépasser le seuil de déformation maximale $\Delta M1max$ et à déformer la conduite 5 de façon irréversible, ce qui entraînerait une détérioration matérielle de la conduite 5.. La pression P exercé sur le vérin de poussée 1121 ne doit donc pas conduire à une déformation radiale $\Delta M1$ supérieure au seuil de déformation maximale $\Delta M1max$. La mesure de la déformation radiale $\Delta M1$, sans dépassement du seuil de déformation maximale $\Delta M1max$, et la pression P exercé permettant d'induire une telle déformation radiale $\Delta M1$ sont alors des indicateurs qui déterminent la tenue mécanique et la rigidité de l'ensemble formé par la portion de conduite 5 et la paroi rigide 6.

Optionnellement, le troisième seuil Pmax peut être atteint. Un tel troisième seuil Pmax correspond à un seuil de pression maximale Pmax exerçable par l'organe de mise en pression sur le vérin de poussée 1121, une pression P exercé au-delà du seuil de pression maximale Pmax entraînant une déformation irréversible et une dégradation de la portion de conduite 5.

En effet, lorsque la pression P exercée sur la portion de conduite 5 augmente comme illustrée par la Figure 12, la contrainte occasionnée par le patin de poussée 1122 sur la portion de conduite 5 augmente jusqu'à atteindre une contrainte maximale supportée par la portion de conduite 5. Plus généralement, la contrainte maximale supportée par une portion de conduite 5 dépend de ses propriétés physiques (comme ses matériaux et des valeurs comme leur module d'élasticité, leur coefficient de Poisson) et géométriques (comme ses dimensions ou son épaisseur) et du chargement appliqué.

Il en résulte d'une telle contrainte maximale supportée par la portion de conduite 5, un seuil de pression maximale Pmax au-delà duquel une pression P exercée sur le vérin de poussée 1121 de la structure de mesure 11 du dispositif 1 entraînerait une dégradation irréversible de la portion de conduite 5. La pression exercée par l'organe de mise en pression sur le vérin de poussée 1121 est donc mesurée et pilotée de sorte à ne pas dépasser un tel seuil de pression maximale Pmax.

Sur la figure 12, la courbe de pression-déformation atteint d'abord un premier seuil de contact K, puis atteint soit le deuxième seuil de déformation maximale ΔM1max soit le troisième seuil de pression maximale Pmax . En variante, les premier K, deuxième ΔM1max et troisième Pmax seuils peuvent être atteints pour différentes valeurs de la pression P exercée sur le vérins de poussée 1121 et selon un ordre différent, même si en pratique, le premier seuil K est atteint avant d'atteindre les deuxième ΔM1max et troisième seuil Pmax. La mise en pression du vérin de poussée 1121 est toutefois pilotée de sorte à arrêter la mise en pression lorsqu'un seuil parmi le deuxième seuil ΔM1max et le troisième seuil Pmax est atteint, même si le premier seuil K n'est pas encore détecté, de sorte à ne pas endommager la portion de conduite 5.

Il est maintenant fait référence à la Figure 13. La Figure 13 illustre le fonctionnement général du dispositif 1 placé à l'intérieur d'une conduite 5 d'une galerie. Dans l'exemple décrit ici, la portion de conduite 5 est de forme cylindrique d'axe de révolution X et de rayon R. L'origine de l'axe X, notée O sur la Figure 13, correspond à la position prédéterminée d'un trou d'homme TH présent sur la portion de conduite 5. Le dispositif 1 est ainsi inséré à l'intérieur de la conduite 5 via le trou d'homme, considéré comme le point d'origine de l'axe X de la portion de conduite 5. Dans un mode de réalisation, le dispositif 1 se déplace alors à l'intérieur de la portion de conduite 5 via le chariot porteur 12 (et plus précisément ses roues 1211), après une éventuelle étape d'assemblage du chariot porteur 12, comme illustrée sur la Figure 4. Le déplacement du chariot porteur 12 du dispositif 1 repose sur un attelage et un système de treuil comme représenté sur la Figure 13 ce qui permet au chariot porteur 12 et donc au dispositif 1 d'avancer à l'intérieur de la portion de conduite 5, notamment par gravité. Le dispositif 1 est donc relié de façon filaire par un câble à un système de contrôle CTRL situé à l'extérieur de la conduite 5. En variante, le chariot porteur 12 peut être équipé d'un moteur lui permettant de se déplacer à l'intérieur de la portion de conduite 5 de façon autonome.

Le dispositif 1 avance donc depuis une position axiale initiale d'origine O (sur l'axe X) jusqu'à une position x prédéfinie, qui correspond à la position axiale d'une portion de conduite 5 dans laquelle le dispositif 1 effectue des mesures de jeux mécaniques et de tenue mécanique. La position x de la portion de conduite 5 peut être détectée par la longueur du câble déroulé par le système de treuil et permet donc d'arrêter le dispositif 1 au niveau de la position x. En variante, le dispositif 1 peut comprendre une mémoire stockant les positions axiales d'arrêts du dispositif 1 ainsi qu'un système de géolocalisation lui permettant de détecter chaque position axiale d'arrêt.

Le blocage du dispositif 1 sur la portion de conduite 5 de position prédéfinie x est rendu possible par la mise en pression du vérin de fixation 1213 de chaque extrémité 121 du chariot porteur 12, le patin de fixation 1212 de chaque extrémité 121 du chariot porteur 12 venant bloquer ce dernier sur la portion de conduite 5. Pour ce faire, le dispositif 1 est relié à un organe de mise en pression via une ligne d'alimentation de vérin, par l'intermédiaire du câble par exemple, permettant au système de contrôle CTRL de piloter à distance une pression à exercer sur le vérin de fixation 1213 du dispositif 1 par l'intermédiaire de l'organe de mise en pression, localisé au niveau du système de contrôle CTRL. Le vérin de fixation 1211 du dispositif 1 est alimenté par la ligne d'alimentation de vérin et reçoit alors la pression P exercée. Une telle pression P est exercée par l'organe de mise en pression, qui correspond à un système automatisé de pompage. En variante, l'organe de mise en pression correspond à une pompe actionnée manuellement par des opérateurs depuis le système de contrôle CTRL à l'extérieur de la conduite 5. Une fois le chariot porteur 12 bloqué sur la portion de conduite 5 de position x, la liaison pivot entre la structure de mesure 11 et le chariot porteur 12 du dispositif 1 permet le positionnement de la structure de mesure 11 selon plusieurs axes radiaux Y, tous perpendiculaires à l'axe X, comme représenté sur la Figure 13. Pour une position axiale x fixée, on peut définir une position radiale α de la structure de mesure 11 dans le cercle de rayon R de la portion de conduite 5 comme illustré sur la Figure 13. En particulier, une fois la position axiale x fixée, le dispositif 1 contient une mémoire stockant les différentes positions radiales α (et donc les différents axes radiaux Y choisis). Dans l'exemple décrit ici, le dispositif 1 des Figures 1 à 3 a réalisé des mesures sur l'ensemble d'une portion de conduite 5 de position x lorsque les positions radiales α allant de 0 à 180 degrés ont été couvertes, la structure de mesure 11 du dispositif 1 comprenant deux patins de poussée 1122.

De façon similaire au pilotage du vérin de fixation 1213 du chariot porteur 12, les vérins de poussée 1122 de la structure de mesure 11 sont pilotés par l'organe de mise en pression du système de contrôle CTRL de sorte que les pressions P0 et P reçues des vérins de poussée 1122 de la structure de mesure 11 sont exercées manuellement par l'opérateur. Dans ce mode de réalisation, toute pression P0, P exercée peut être quantifiée et manuellement régulée, l'opérateur ayant accès à un système de pompage et un manomètre associé. En variante, la pression reçue par les vérins du dispositif 1 pour la fixation du chariot porteur 12 comme pour la mise en poussée de la structure de mesure 11 est pilotée de façon automatisée par un système de contrôle CTRL.

Par ailleurs, le dispositif 1 comprend un appareillage de mesure permettant au dispositif 1 d'obtenir des mesures de la déformation radiale ΔM1 induite par la pression P exercée. Le dispositif 1 comprend par conséquent une interface d'entrée lui permettant de récolter les mesures de déformation radiale ΔM1 de la portion de conduite 5. Dans un mode de réalisation, ces mesures sont alors communiquées en continu de façon filaire au système de contrôle CTRL, de sorte que le système de contrôle CTRL, incluant un circuit de traitement composé a minima d'une mémoire MEM et d'un processeur PROC, reçoit les données de mesure de déformation radiale ΔM1 et, ayant accès aux mesures de pression P, est apte à obtenir la courbe de pression-déformation telle qu'illustrée sur la Figure 12. En variante, ces mesures de déformation radiale ΔM1 provenant de l'appareillage de mesure du dispositif 1 sont stockées dans une mémoire interne du dispositif 1 pour être récupérées *a posteriori*.

Le pilotage, manuel ou automatisé, de la pression exercée P sur les vérins de poussée 1121 et la déformation radiale ΔM1 induite sur la portion de conduite 5 sont régulés par le système de contrôle en continu par mesure continue de la pression P exercée sur les vérins de poussée 1121 et de la déformation radiale induite ΔM1 par la pression P. Ces mesures de pression P exercée et de déformation radiale ΔM1 induite sont comparées aux premier K, deuxième ΔM1max et troisième Pmax seuils précalculés de sorte que le seuil de contact K atteint par la déformation radiale ΔM1, le seuil de déformation maximale ΔM1max atteint par la déformation radiale ΔM1 et/ou le seuil de pression maximale Pmax atteint par la pression P exercée sont détectés avec une précision quasi instantanée. Les seuils de déformation maximale ΔM1max et de pression maximale Pmax étant prédéterminés, ils peuvent être détectables par un opérateur ou en variante, être stocké en mémoire MEM, de sorte que la pression P exercée est stoppée dès que la mesure de la déformation radiale ΔM1 atteint sensiblement le seuil de déformation maximale ΔM1max ou dès que la mesure de la pression P exercée atteint sensiblement le seuil de pression maximale Pmax. De la même façon, le seuil de contact K peut être détecté par calcul de la pente de la courbe de pression-déformation par le processeur PROC du système de contrôle CTRL. Cette détection du seuil de contact K permet alors d'enregistrer la valeur de déformation radiale ΔM1 obtenue comme correspondant à une mesure du jeu mécanique 7 existant entre la portion de conduite 5 et la paroi rigide 6 pour un coulage de béton *a posteriori* afin de combler ce jeu 7.

Ainsi, dans un mode de réalisation dit « automatisé », le système de contrôle CTRL est intégré au dispositif 1 de mesure de sorte que le dispositif 1 comprend un circuit de traitement composé a minima d'une interface INT, d'un processeur PROC et d'une mémoire MEM. La mémoire MEM du dispositif 1 stocke dans une mémoire permanente intégrée à la mémoire MEM une liste des positions axiales x d'arrêts du chariot porteur 12 dans une portion de conduite 5 donnée, les positions radiales α d'arrêts de la structure de mesure 11, le seuil de déformation maximale ΔM1max et le seuil de pression maximale Pmax pour une portion de conduite 5 donnée entre autres. Une mémoire vive intégrée à la mémoire MEM du dispositif 1 stocke alors, sous forme numérisée, les positions axiales x et les positions radiales α atteintes, les valeurs de pression P exercées et obtenues via les manomètres de l'organe de mise en pression et les déformations radiales ΔM1 induites pour une position (x, α) donnée d'une portion de conduite 5, de sorte que le dispositif 1 est capable de piloter la pression P exercée jusqu'à détection d'au moins un seuil parmi les premier K, deuxième ΔM1max et troisième Pmax seuils stockés en mémoire du dispositif 1. Les valeurs de déformation radiale ΔM1 captées par l'appareillage de mesure du dispositif 1 sont alors directement transmises à cette mémoire vive pour être utilisées par le processeur PROC. Les données entre les capteurs du dispositif 1 et le circuit de traitement transitent alors via une interface INT. Dans un mode de réalisation, le processeur PROC est capable de calculer en temps réel, à partir des données de pression P exercée et des mesures de déformation radiale ΔM1 obtenues, un rapport d'allongement, défini comme la variation de pression en un pas de temps sur la déformation radiale ΔM1 induite sur ce pas de temps (cela revient à calculer la pente de la courbe pression-déformation de la Figure 12). Lorsque ce rapport d'allongement dépasse une certaine valeur prédéfinie, stockée en mémoire MEM du dispositif 1, le dispositif 1 détecte que le premier seuil, à savoir le seuil de contact K, est atteint. Autrement dit, le rapport d'allongement (correspondant à la pente de la courbe pression-déformation de la Figure 12) est calculé à chaque nouvelle instruction de mise en pression des vérins de poussée 1121 et comparé à des valeurs seuils stockées en mémoire MEM du dispositif. Une instruction du type « augmentation de la pression » ou « arrêt de la mise en pression » est alors choisie pour le pilotage des vérins de poussée 1121.

Dans ce mode de réalisation, la régulation de la pression est donc automatisée et prise en charge par le dispositif 1. Un algorithme de traitement permettant le pilotage automatique de la pression à exercer sur les vérins de poussée 1121 en fonction de la déformation radiale ΔM1 induite est alors embarqué sur un support d'enregistrement non transitoire lisible et exécutable par le processeur PROC du dispositif 1. Il en résulte alors que pour une position (x, α) de la conduite 5, le dispositif 1 peut obtenir une mesure du jeu mécanique 7 existant entre la conduite 5 et la paroi rigide 6 (ce qui correspond à une déformation radiale ΔM1 = K) et une mesure de la rigidité de l'ensemble formé par la conduite 5 et la paroi rigide 6 ainsi que les pressions P conduisant à ces mesures.

Dans un autre mode de réalisation, le système de contrôle CTRL est localisé à l'extérieur de la conduite 5, comme représenté sur la Figure 13. Le dispositif 1 est chargé de l'application des instructions de mise en pression délivrées par le système de contrôle CTRL ainsi que de l'obtention des mesures de déformation radiale $\Delta M1$ induites via un appareillage de mesure intégré au dispositif 1. Ces mesures de déformation radiale $\Delta M1$ sont alors transférées par voie filaire au système de contrôle CTRL, par l'intermédiaire de l'interface INT, qui les stocke sur une mémoire MEM pour être ensuite traitées automatiquement par un processeur PROC. Le circuit de traitement PROC, MEM du système de contrôle CTRL permet de réguler automatiquement le pilotage de la pression P à exercer sur les vérins de poussée 1121 du dispositif 1 en fonction des mesures de déformation radiale $\Delta M1$ obtenues par l'appareillage de mesure de déformation radiale du dispositif 1. En variante, le système de contrôle CTRL peut piloter et réguler la pression à exercer sur les vérins de poussée 1121 du dispositif 1 sous la supervision d'un opérateur, qui actionne et régule manuellement la pression transmise au dispositif 1.

Il est maintenant fait référence à la Figure 14. La Figure 14 représente les différentes étapes d'un procédé de mesure d'un jeu mécanique 7 entre une conduite 5 et une paroi rigide 6. Dans un mode de réalisation, le procédé permet également d'évaluer une rigidité et une tenue mécanique d'un ensemble formé de la conduite 5 et de la paroi rigide 6.

À une étape S1a, une mesure d'une position axiale x du dispositif 1 est obtenue. Cette position axiale x définit la position de la portion de conduite 5 dans laquelle le procédé sera mis en œuvre par rapport à un axe de référence X. Une telle mesure est obtenue par le déroulement d'un câble attelant le dispositif 1, situé à l'intérieur de la conduite 5, et relié à un système de treuil. La longueur de câble libérée par l'attelage du dispositif pour son déplacement à l'intérieur de la conduite 5 depuis une position d'origine prédéterminée (O) jusqu'à une portion de conduite 5 donnée permet d'obtenir la position axiale x du dispositif 1. En variante, le dispositif 1 est automatisé et un système de géolocalisation particulier permet alors au dispositif 1 d'obtenir une position axiale x ou toute autre valeur identifiant la portion de conduite 5 dans laquelle se trouve le dispositif 1. Cette position axiale x est alors retenue dans une mémoire MEM du dispositif 1 et toutes les mesures obtenues dans les étapes suivantes du procédé seront associées à cette position axiale x.

À une étape S1b, une mesure d'une position radiale $\alpha$ du dispositif 1 est obtenue pour une position axiale x fixée. Cette position radiale $\alpha$ définit la direction radiale dans laquelle la suite du procédé sera mise en œuvre. En variante, une coordonnée différente d'un angle peut être obtenue de sorte à identifier la position radiale de la structure de mesure 11 dans une portion de conduite 5 de position axiale x donnée. Une telle position radiale $\alpha$ est obtenue par un capteur de position radiale intégré à la structure de mesure 11 du dispositif 1, le capteur de position radiale transmettant ensuite la position radiale $\alpha$ détectée à un système de contrôle CTRL enregistrant cette donnée de position radiale $\alpha$ de sorte que toutes les mesures obtenues dans les étapes suivantes du procédé seront associées à la position (x ; $\alpha$).

À une étape S1c, une fois la position (x ; $\alpha$) identifiée (et éventuellement enregistrée), une pression est exercée sur le vérin de fixation 1213 de chaque extrémité 121 du chariot porteur 12 du dispositif 1 de sorte à induire un déplacement d'un patin de fixation 1212 relié au vérin de fixation 1213. Le patin de fixation 1212 est dans un mode dit « déplié » et sert à bloquer le dispositif 1 sur la position axiale x identifiée. Une telle pression est exercée par un organe de mise en pression et pilotée depuis le système de contrôle CTRL du dispositif 1 et transmise au dispositif 1 par l'intermédiaire d'une ligne d'alimentation de vérin. La ligne d'alimentation de vérin relie notamment le vérin de fixation 1213 à l'organe de mise en pression. La valeur d'une telle pression est connue, car elle est notamment liée au rayon R de la portion de conduite 5. En variante, le patin de fixation 1212 peut comprendre un capteur de sorte qu'un contact entre le patin de fixation 1212 et une surface intérieure 52 de la portion de conduite 5 peut être détecté. La pression exercée par l'organe de mise en pression est mesurable par ce dernier de sorte que lorsque le capteur du patin de fixation 1212 détecte un contact avec la surface intérieure 52 de la conduite 5, la pression exercée sur le vérin de fixation 1213 est arrêtée. Une fois l'étape S1c mise en œuvre, les patins de fixation 1212 inclus dans le dispositif 1 sont tous dépliés et le dispositif 1 est alors immobilisé sur la portion de conduite 5 de position axiale x. Dans un autre mode de réalisation, les étapes S1c et S1b peuvent être interverties. En effet, la fixation du dispositif 1 à une portion de la conduite 5 est effectuée indépendamment de la position axiale du dispositif 1, qui correspond en réalité à la position axiale de la structure de mesure 11 du dispositif 1.

À une étape S2, une pression P0 est exercée sur le vérin de poussée 1121 de la structure de mesure 11 du dispositif 1 de sorte à induire un premier déplacement d'un patin de poussée 1122 relié au vérin de poussée 1121. Ce premier déplacement du patin de poussée 1122 a pour objectif de mettre en contact le patin de poussée 1122 et un élément de la surface intérieure 52 de la portion de conduite 5, sans que le patin de poussée 1122 n'exerce une quelconque pression sur la portion de conduite 5 à ce stade. Il s'agit d'un « point d'initialisation » de la mesure de sorte à relever la pression P0 et le premier déplacement du patin de poussée 1122, qui correspondent aux valeurs dites « initiales » de pression et de déplacement respectivement. La pression P0 est exercée sur le vérin de poussée 1121 et relevée de façon similaire à la pression exercée sur le vérin de fixation 1212 à l'étape S1c. En effet, la ligne d'alimentation de vérin relie notamment le vérin de poussée 1121 à l'organe de mise en pression. Dans ce mode de réalisation, on peut imaginer un organe de mise en pression incluant plusieurs « robinets de pression » ou sous-organes de mise en pression, de sorte que la mise en pression de chaque vérin de la ligne d'alimentation de vérin est indépendante, ce qui permet à un seul organe de mise en pression de piloter la pression exercée sur des vérins différents (dans le cas présent, sur les différents vérins de poussée 1121 et sur les vérins de fixation 1212). De la même façon que pour la mise en pression du vérin de fixation 1212, le patin de poussée 1122 comprend un capteur de sorte qu'un contact entre le patin de poussée 1122 et une surface intérieure 52 de la portion de conduite 5 peut être détecté. La pression exercée par l'organe de mise en pression sur le vérin de poussée 1121 est mesurable par l'organe de mise en pression de sorte que lorsque le capteur du patin de poussée 1122 détecte un contact avec la surface intérieure 52 de la conduite 5, la pression exercée sur le vérin de poussée 1121 est arrêtée. Une fois l'étape S2 mise en œuvre, le « point d'initialisation » de la mesure est atteint et la structure de mesure 11 est en contact avec la surface intérieure 52 de la portion de conduite 5.

À une étape S3, la pression P exercée sur le vérin de poussée 1121 de la structure de mesure 11 du dispositif 1 dépasse la pression initiale P0 de sorte que le patin de poussée 1122 exerce une pression sur la surface intérieure 52 de la portion de conduite 5. occasionnant une déformation radiale $\Delta$M1 de cette dernière.

À une étape S4, d'une part, la pression P exercée sur le vérin de poussée 1121 est relevée par l'organe de mise en pression à l'aide d'un manomètre par exemple, de façon similaire aux étapes précédentes. D'autre part, la déformation radiale $\Delta$M1 de la surface intérieure 52 de la portion de conduite 5 induite par cette pression P est captée par un appareillage de mesure inclus au dispositif 1. Cet appareillage de mesure peut par exemple correspondre au capteur de déplacement rattaché au patin de poussée 1122, de sorte que la mesure de déformation radiale $\Delta$M1 correspond à une mesure du déplacement du patin de poussée 1122 induit par la pression P par rapport à une position de référence du patin de poussée 1122 défini au point d'initialisation à l'étape S2. Une telle mesure de la déformation radiale $\Delta$M1 est alors obtenue par le dispositif 1 via son appareillage de mesure. La mesure de la déformation radiale $\Delta$M1 est associée à la mesure de pression P correspondante. Ces mesures sont alors stockées dans une mémoire MEM du dispositif 1. En variante, ces mesures (P ; $\Delta$M1) peuvent être transmises au système de contrôle CTRL du dispositif 1. Les étapes S3 et S4 peuvent correspondre à une pression P exercé de façon croissante et continue de sorte que plusieurs mesures de (P ; $\Delta$M1) peuvent être obtenues par le dispositif 1. L'augmentation de la pression P exercé entraîne alors une augmentation de la déformation radiale $\Delta$M1 associée.

À ce stade, le dispositif 1 applique, via l'organe de mise en pression, une pression P croissante sur le vérin de poussée 1121 et relève une déformation radiale induite $\Delta$M1 croissante. À une étape S51, il s'agit d'évaluer si une situation de contact entre la portion de conduite 5 et la paroi rigide 6 entourant la conduite 5 a eu lieu. En effet, plus la déformation radiale $\Delta$M1 de la portion de conduite 5 est importante, plus la surface extérieure 51 de la portion de conduite 5 se rapproche de la paroi rigide 6. Cette situation de contact est détectable en particulier lorsque la pression P exercée sur le vérin de poussée 1121 n'induit plus une déformation radiale $\Delta$M1 proportionnelle à P. Autrement dit, la situation de contact entre la conduite 5 et la paroi 6 est atteinte lorsque le rapport entre la variation de pression exercée et la variation de déformation radiale induite $\Delta$M1 n'est plus sensiblement constante (on peut appeler ce rapport un rapport d'allongement). La valeur de la déformation radiale $\Delta$M1 correspondant à la situation de contact entre la conduite 5 et la paroi 6 a alors atteint un premier seuil K et est appelée « seuil de contact » K. La détection du seuil de contact K est mise en œuvre par le dispositif 1. Dans ce cas, le dispositif 1 comprend un circuit de traitement composé a minima d'un processeur PROC et d'une mémoire MEM et le processeur PROC du dispositif est apte à calculer le rapport d'allongement pour chaque mesure (P ; $\Delta$M1). Le seuil de contact K est alors détecté lorsque le rapport d'allongement n'est plus sensiblement constant et dépasse une valeur seuil prédéfinie. En variante, la détection du seuil de contact K peut être mise en œuvre par le système de contrôle CTRL à distance du dispositif 1. Dans ce cas, le dispositif 1 transmet les mesures (P ; $\Delta$M1) au système de contrôle CTRL qui calcule le rapport d'allongement et détecte éventuellement un seuil de contact K.

Il en résulte qu'à l'étape S51, si le premier seuil de contact K n'est pas détecté, la pression exercé sur le vérin de poussée 1121 continue d'augmenter et le procédé revient à l'étape S3. Au contraire, si le seuil de contact K est détecté, la valeur de déformation radiale $\Delta$M1 = K est enregistrée (soit par le dispositif 1 soit par le système de contrôle CTRL) comme correspondant à une mesure du jeu mécanique 7 entre la portion de conduite 5 et la paroi rigide 6 pour une position (x ; $\alpha$) identifiée. À ce stade, le procédé a permis d'obtenir une mesure du jeu mécanique entre une portion de la conduite 5 et la paroi rigide 6 et une étape S52 est alors mise en œuvre.

À l'étape S52, il s'agit de vérifier si la déformation radiale induite $\Delta$M1 par la pression P est physiquement tolérable pour la portion de conduite 5. Autrement dit, cela revient à détecter si un deuxième seuil, à savoir le seuil de déformation maximale $\Delta$M1max, distinct du premier seuil K, a été atteint. Le seuil de déformation maximale $\Delta$M1max dépend des caractéristiques matérielles de la portion de conduite 5 comme son diamètre D, son épaisseur, son module d'élasticité et son coefficient de Poisson entre autres. Par conséquent, il correspond à une valeur prédéterminée et pré-calculable de sorte à pouvoir être stockée en mémoire MEM soit du dispositif 1, soit du système de contrôle CTRL de sorte que l'un ou l'autre est capable de comparer la mesure de déformation radiale $\Delta$M1 obtenue au seuil de déformation maximale $\Delta$M1max. Une déformation radiale $\Delta$M1 dépassant le seuil de déformation maximale $\Delta$M1max conduit à une déformation irréversible de la portion de conduite 5 et donc à une dégradation potentielle de la conduite. Par conséquent, à l'étape S52, si la déformation radiale $\Delta$M1 atteint une valeur sensiblement égale au seuil de déformation maximale $\Delta$M1max, la mise en pression du vérin de poussée 1121 est arrêtée à une étape S6 et le procédé S0 prend alors fin. Au contraire, si le seuil de déformation maximale $\Delta$M1max n'est pas encore atteint, le procédé revient à l'étape S3 de sorte à continuer à exercer une pression P croissante sur la portion de conduite 5. En effet, cette augmentation de pression P permet, à ce stade, d'évaluer la rigidité et la tenue mécanique de l'ensemble formé par la conduite 5 et la paroi rigide 6.

De façon optionnelle, un troisième seuil Pmax, à savoir un seuil de pression maximale Pmax lié à une contrainte maximale supportée par la portion de conduite 5 peut être prédéfini et comparé à la pression P exercée sur le vérin de poussée 1121 en substitution ou en complément de l'étape S52. Le seuil de pression maximale Pmax traduit, à l'instar du seuil de déformation maximale ΔM1max, une limite matérielle de la conduite 5 à ne pas dépasser au risque de détériorer la conduite 5 de façon irréversible.

Les étapes S1b à S6 du procédé peuvent alors être répétées pour une position radiale α différente de la portion de conduite 5 de position axiale x, de sorte à obtenir des mesures de déformation radiale ΔM1 en différents axes radiaux Y sur une portion de conduite 5 donnée. Le nombre d'itérations des étapes S1b à S6 pour une portion de conduite 5 de position axiale x donnée dépend, entre autres, de la précision attendues des mesures, des dimensions des patins de poussée 1122, du nombre de patins de poussée 1122 inclus dans la structure de mesure 11. Deux positions radiales distinctes peuvent tout à fait présenter des caractéristiques différentes notamment en épaisseur.

Le procédé peut également être réitéré sur une nouvelle portion de conduite 5 de position axiale x différente, de sorte à obtenir des mesures de déformation radiale ΔM1 en différentes portions de la conduite 5. Deux portions de conduite 5 différentes peuvent tout à fait présenter des caractéristiques différentes, notamment en matériaux, épaisseur, en diamètre ou en axe X (pourvu que les portions soient cylindriques). Le dispositif 1 prévoit donc une modularité de ses dimensions notamment dans la longueur du corps du chariot porteur 12 ou le dimensionnement des patins 1212, 1122 et des roues 1211 de sorte que le dispositif 1 peut être utilisé dans des portions de conduites de matériaux et dimensions divers.

Le procédé est exécuté par un circuit de traitement contenu dans un système de contrôle CTRL intégré au dispositif 1 de mesure. Dans un autre mode de réalisation, le procédé S0 peut être exécuté dans un système de contrôle CTRL séparé du dispositif 1 de sorte que les données échangées entre le dispositif 1 et le système de contrôle CTRL circulent par un câble, comme représenté sur la Figure 13.

## Application industrielle

Le dispositif 1 de mesure décrit peut trouver à s'appliquer notamment pour évaluer la tenue mécanique d'installations hydrauliques dont le dimensionnement et la fiabilité doivent être quantifiés. Le dispositif 1 est en particulier utilisable sans mise en eau et en une seule vidange de la conduite 5.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

## Revendications

**1.** Dispositif (1) de mesure d'un jeu mécanique (7) entre une conduite (5) déformable et une paroi rigide (6), le dispositif (1) comprenant au moins un chariot porteur (12) agencé :

- pour se déplacer à l'intérieur de la conduite (5) jusqu'à une portion de la conduite (5), de position prédéfinie (x), et
- pour porter une structure de mesure (11) comprenant au moins un vérin de poussée (1121) relié à un patin de poussée (1122), le patin de poussée (1122) étant conformé pour prendre appui sur un élément de surface intérieure (52) de la portion de conduite (5), dans lequel le vérin de poussée (1121) est agencé pour convertir une pression (P) reçue en une force mécanique exercée, via le patin de poussée (1122), sur l'élément de surface intérieure (52) de la portion de conduite (5) en induisant au moins une déformation radiale (ΔM1) de la portion de conduite (5) jusqu'à détection d'un seuil,
le dispositif (1) comportant en outre :

- un organe de mise en pression du vérin de poussée (1121), apte à mesurer au moins la pression (P) exercée sur le vérin de poussée (1121),
- un appareillage de mesure apte à obtenir une mesure de la déformation radiale (ΔM1) de la portion de conduite (5),

le dispositif (1) comprenant des moyens de détection dudit seuil, ledit seuil étant détecté à partir des mesures de la pression (P) et de la déformation radiale (ΔM1) obtenues par le dispositif (1), le dispositif (1) étant configuré pour obtenir, après détection du seuil, des données relatives audit jeu mécanique à partir, au moins, des mesures de la pression (P) et de la déformation radiale (ΔM1).

**2.** Dispositif (1) selon la revendication 1, la portion de la conduite (5) étant de forme cylindrique d'axe de révolution X, dans lequel un organe de liaison (10) relie la structure de mesure (11) au chariot porteur (12) de sorte que la structure de mesure (11) est montée mobile en rotation par rapport au chariot porteur (12) selon l'axe de révolution X.

3. Dispositif (1) selon l'une des revendications précédentes, dans lequel le chariot porteur (12) comporte des roues (1211) pour se déplacer à l'intérieur de la conduite (5) par contact des roues (1211) sur une surface intérieure (52) de la conduite (5),

Et dans lequel le chariot porteur (12) comporte en outre au moins un bras (122) relié mécaniquement aux roues (1211), et comprenant au moins un patin de fixation (1212) conformé pour prendre appui sur un élément de surface intérieure (52) de la portion de conduite (5) de sorte à bloquer le chariot porteur (12) sur la portion de la conduite (5).

4. Dispositif (1) selon la revendication 3, dans lequel le chariot porteur (12) comporte une pluralité de bras (122) reliés chacun mécaniquement à des roues (1211), et articulés ensemble sous forme de liaison parapluie.

5. Dispositif (1) selon l'une des revendications précédentes, dans lequel l'organe de mise en pression du vérin de poussée (1121) est relié au vérin de poussée (1121) par au moins une ligne d'alimentation de vérin pilotable à distance, de sorte que la pression exercée sur le vérin de poussée (1121) est ajustable et mesurable à distance.

6. Dispositif (1) selon l'une des revendications précédentes, dans lequel la déformation radiale ($\Delta$M1) de la portion de conduite (5) induite par ladite pression (P) correspond à un allongement de la portion de conduite (5), ledit allongement traduisant un rapprochement d'une surface extérieure (51) de la portion de conduite (5) par rapport à la paroi rigide (6) sur le jeu mécanique (7) entre la portion de conduite (5) et la paroi rigide (6).

7. Dispositif (1) selon l'une des revendications précédentes, dans lequel l'appareillage de mesure comporte un capteur de déplacement relié au patin de poussée (1122).

8. Dispositif (1) selon l'une des revendications précédentes, dans lequel, la portion de conduite (5) étant réalisée dans un matériau donné, le dispositif (1) comporte une mémoire (MEM) apte à stocker au moins un seuil de pression maximale (Pmax) de la portion de conduite (5), ledit seuil de pression maximale (Pmax) dépendant au moins du matériau donné de la portion de conduite (5),

et dans lequel ledit seuil est obtenu pour une pression (P) exercée sur le vérin de poussée (1121) inférieure ou égale audit seuil de pression maximale (Pmax) de la portion de conduite (5).

9. Dispositif (1) selon l'une des revendications précédentes, la portion de conduite (5) étant de forme cylindrique et **caractérisée par** au moins un diamètre (D) et le dispositif (1) comportant une mémoire (MEM) apte à stocker au moins un seuil de déformation maximale ($\Delta$M1max) de la portion de conduite (5), ledit seuil de de déformation maximale ($\Delta$M1max) dépendant au moins du diamètre (D) de la portion de conduite (5),

et dans lequel ledit seuil est inférieur ou égal au seuil de déformation maximale ($\Delta$M1max) de sorte que la déformation radiale ($\Delta$M1) de la portion de conduite (5) induite par ladite pression (P) exercée sur le vérin de poussée (1121) n'excède pas le seuil de déformation maximale ($\Delta$M1max).

10. Dispositif (1) selon l'une des revendications précédentes, dans lequel une augmentation de la pression (P) exercée sur le vérin de poussée (1121) induit une augmentation proportionnelle de la déformation radiale ($\Delta$M1) de la portion de conduite (5) jusqu'à un seuil de contact (K) correspondant à une situation de contact entre une surface extérieure (51) de la portion de conduite (5) avec la paroi rigide (6), ledit seuil de contact (K) étant atteint sur détection d'une variation de déformation radiale ($\Delta$M1) moindre malgré une augmentation constante de pression (P) exercée sur le vérin de poussée (1121), ledit seuil étant supérieur ou égal audit seuil de contact (K).

11. Dispositif (1) selon la revendication 10, le dispositif (1) étant agencé pour estimer un rapport d'allongement liant la pression exercée (P) et la déformation radiale ($\Delta$M1) induite par ladite pression (P) exercée, en fonction de données de mesures ($\Delta$M1, P) reçues au moins de l'appareillage de mesure et de l'organe de mise en pression respectivement, et dans lequel le seuil de contact (K) est déterminé comme atteint lorsque le rapport d'allongement devient supérieur à une valeur prédéfinie.

12. Dispositif (1) selon les revendications 8, 9 et 10 prises en combinaison, dans lequel la pression (P) exercée sur le vérin de poussée (1121) est relâchée si un élément parmi le seuil de pression maximale (Pmax) et le seuil de déformation maximale ($\Delta$M1max), est atteint avant d'atteindre le seuil de contact (K) de la portion de conduite (5), afin de ne pas risquer de détériorer la conduite (5).

13. Procédé de mesure d'un jeu mécanique (7) entre une conduite (5) déformable et une paroi rigide (6) mis en œuvre par un dispositif (1) de mesure de jeu mécanique, le dispositif (1) comprenant au moins un chariot porteur (12) agencé :

- pour se déplacer à l'intérieur de la conduite (5) jusqu'à une portion de la conduite (5), de position prédéfinie (x), et
- pour porter une structure de mesure (11) comprenant au moins un vérin de poussée (1121) relié à un patin de poussée (1122), le patin de poussée (1122) étant conformé pour prendre appui sur un élément de surface intérieure (52) de la portion de conduite (5), le procédé de mesure consistant à :

f) relever (S1a) une position axiale (x) du chariot porteur (12) correspondant à la position prédéfinie de la portion de conduite (5) par rapport à une position axiale d'origine (O) prédéfinie,

g) relever (S1b) une position radiale ($\alpha$) de la structure de mesure (11) sur la portion de conduite (5) par rapport à une position radiale d'origine prédéfinie,

h) exercer (S2) une pression initiale (P0) sur le vérin de poussée (1121), pour mettre en contact le patin de poussée (1122) sur l'élément de surface intérieure (52) de la portion de conduite (5) et relever ladite pression initiale (P0),

i) exercer (S3) une pression (P) sur le vérin de poussée (1121) de sorte à induire une déformation radiale ($\Delta M1$) sur la portion de conduite (5) et relever (S4) au moins une mesure de la pression (P) associée à la déformation radiale ($\Delta M1$) induite par ladite pression (P) et une mesure de ladite déformation radiale ($\Delta M1$) de la portion de conduite (5),

j) réitérer l'étape d) en augmentant la pression exercée sur le vérin de poussée et relever (S4) à chaque itération au moins la pression (P) exercée jusqu'à atteindre un seuil (S51, S52),

k) obtenir, après détection du seuil, des données relatives audit jeu mécanique à partir, au moins, des mesures de la pression (P) et de la déformation radiale ($\Delta M1$).

14. Application du procédé de mesure selon la revendication 13 à la détermination d'une tenue mécanique d'une conduite (5) soumise à une pression hydraulique, dans laquelle ladite conduite (5) est une conduite d'installation hydraulique et ladite paroi rigide (6) est une paroi rocheuse et/ou bétonnée.

15. Programme informatique comportant des instructions pour la mise en œuvre du procédé selon la revendication 13, lorsque lesdites instructions sont exécutées par un circuit de traitement (PROC, MEM, INT) d'un dispositif selon la revendication 1.

**Patentansprüche**

1. Vorrichtung (1) zum Messen eines mechanischen Spiels (7) zwischen einer verformbaren Leitung (5) und einer starren Wand (6), wobei die Vorrichtung (1) wenigstens einen Tragwagen (12) umfasst, der dazu angeordnet ist,

- innerhalb der Leitung (5) bis zu einem Leitungsabschnitt (5) in einer vorbestimmten Position (x) verschiebbar zu sein, und
- eine Messstruktur (11) zu tragen, die wenigstens einen mit einem Schubschuh (1122) verbundenen Schubzylinder (1121) umfasst, wobei der Schubschuh (1122) so geformt ist, dass er auf einem inneren Oberflächenelement (52) des Leitungsabschnitts (5) aufliegt, wobei der Schubzylinder (1121) dazu angeordnet ist, einen empfangenen Druck (P) in eine mechanische Kraft umzuwandeln, die über den Schubschuh (1122) auf das Innenflächenelement (52) des Leitungsabschnitts (5) ausgeübt wird, wobei sie wenigstens eine radiale Verformung ($\Delta M1$) des Leitungsabschnitts (5) bis zum Erreichen eines Schwellenwerts induziert, wobei die Vorrichtung (1) ferner umfasst:

- ein Druckbeaufschlagungselement für den Schubzylinder (1121), das dazu geeignet ist, wenigstens den auf den Schubzylinder (1121) ausgeübten Druck (P) zu messen,
- eine Messvorrichtung, die dazu geeignet ist, eine Messung der radialen Verformung ($\Delta M1$) des Leitungsabschnitts (5) zu erhalten, wobei die Vorrichtung (1) Mittel zum Erfassen des Schwellenwerts umfasst, wobei der Schwellenwert anhand den von der Vorrichtung (1) erhaltenen Messungen des Drucks (P) und der radialen Verformung ($\Delta M1$) erfasst wird,

wobei die Vorrichtung (1) dazu ausgebildet ist, nach Erfassung des Schwellenwerts Daten bezüglich des mechanischen Spiels anhand wenigstens der Messungen des Drucks (P) und der radialen Verformung ($\Delta M1$) zu erhalten.

2. Vorrichtung (1) nach Anspruch 1, wobei der Leitungsabschnitt (5) eine zylindrische Form mit einer Drehachse X aufweist, wobei ein Verbindungselement (10) die Messstruktur (11) mit dem Tragwagen (12) verbindet, so dass die Messstruktur (11) gegenüber dem Tragwagen (12) um die Drehachse X drehbar gelagert ist.

3. Vorrichtung (1) nach einem der vorhergehenden Ansprüche, wobei der Tragwagen (12) Räder (1211) aufweist, um sich innerhalb der Leitung (5) durch Kontakt der Räder (1211) mit einer Innenfläche (52) der Leitung (5) zu bewegen, und wobei der Tragwagen (12) ferner wenigstens einen Arm (122) aufweist, der mechanisch mit den Rädern (1211) verbunden ist, und wenigstens einen Befestigungsschuh (1212) aufweist, der so geformt ist, dass er auf einem Innenflächenelement (52) des Leitungsabschnitts (5) aufliegt, um den Tragwagen (12) an dem Leitungsabschnitt (5) zu arretieren.

4. Vorrichtung (1) nach Anspruch 3, wobei der Tragwagen (12) eine Mehrzahl von Armen (122) aufweist, die jeweils mechanisch mit Rädern (1211) verbunden und in Form einer schirmförmigen Verbindung miteinander gelenkig verbunden sind.

5. Vorrichtung (1) nach einem der vorhergehenden Ansprüche, wobei das Druckbeaufschlagungselement des Schubzylinders (1121) über wenigstens eine ferngesteuerte Zylinderzufuhrleitung mit dem Schubzylinder (1121) verbunden ist, so dass der auf den Schubzylinder (1121) ausgeübte Druck ferngesteuert einstellbar und messbar ist.

6. Vorrichtung (1) nach einem der vorhergehenden Ansprüche, wobei die durch den Druck (P) induzierte radiale Verformung ($\Delta M1$) des Leitungsabschnitts (5) einer Verlängerung des Leitungsabschnitts (5) entspricht, wobei die Verlängerung eine Annäherung einer Außenfläche (51) des Leitungsabschnitts (5) an die starre Wand (6) an dem mechanischen Spiel (7) zwischen dem Leitungsabschnitt (5) und der starren Wand (6) bedeutet.

7. Vorrichtung (1) nach einem der vorhergehenden Ansprüche, wobei die Messvorrichtung einen mit dem Schubschuh (1122) verbundenen Verlagerungssensor umfasst.

8. Vorrichtung (1) nach einem der vorhergehenden Ansprüche, wobei der Leitungsabschnitt (5) aus einem bestimmten Material hergestellt ist und die Vorrichtung (1) einen Speicher (MEM) aufweist, der wenigstens einen maximalen Druckschwellwert (Pmax) des Leitungsabschnitts (5) speichern kann, wobei der maximale Druckschwellenwert (Pmax) wenigstens vom gegebenen Material des Leitungsabschnitts (5) abhängt, und wobei der Schwellenwert bei einem auf den Schubzylinder (1121) ausgeübten Druck (P) erreicht wird, der kleiner oder gleich dem maximalen Druckschwellenwert (Pmax) des Leitungsabschnitts (5) ist.

9. Vorrichtung (1) nach einem der vorhergehenden Ansprüche, wobei der Leitungsabschnitt (5) zylindrisch geformt ist und durch wenigstens einen Durchmesser (D) gekennzeichnet ist und die Vorrichtung (1) einen Speicher (MEM) aufweist, der wenigstens einen maximalen Verformungsschwellenwert ($\Delta M1max$) des Leitungsabschnitts (5) speichern kann, wobei der maximale Verformungsschwellenwert ($\Delta M1max$) wenigstens vom Durchmesser (D) des Leitungsabschnitts (5) abhängt,
und wobei der Schwellenwert kleiner oder gleich dem maximalen Verformungsschwellenwert ($\Delta M1max$) ist, so dass die durch den auf den Schubzylinder (1121) ausgeübten Druck (P) induzierte radiale Verformung ($\Delta M1$) des Leitungsabschnitts (5) den maximalen Verformungsschwellenwert ($\Delta M1max$) nicht überschreitet.

10. Vorrichtung (1) nach einem der vorhergehenden Ansprüche, wobei eine Erhöhung des auf den Schubzylinder (1121) ausgeübten Drucks (P) eine proportionale Erhöhung der radialen Verformung ($\Delta M1$) des Leitungsabschnitts (5) bis zu einem Kontaktschwellenwert (K) induziert, der einer Kontaktsituation zwischen einer Außenfläche (51) des Leitungsabschnitts (5) und der starren Wand (6) entspricht, wobei der Kontaktschwellenwert (K) bei Erfassung einer geringeren Änderung der radialen Verformung ($\Delta M1$) trotz einer konstanten Erhöhung des auf den Schubzylinder (1121) ausgeübten Drucks (P) erreicht wird, wobei der Schwellenwert größer oder gleich dem Kontaktschwellenwert (K) ist.

11. Vorrichtung (1) nach Anspruch 1, wobei die Vorrichtung (1) dazu angeordnet ist, ein Längungsverhältnis zwischen dem ausgeübten Druck (P) und der durch den ausgeübten Druck (P) induzierten radialen Verformung ($\Delta M1$) zu schätzen, in Abhängigkeit von Messdaten ($\Delta M1$, P), die wenigstens von der Messvorrichtung und dem Druckbeaufschlagungselement empfangen werden,
und wobei der Kontaktschwellenwert (K) als erreicht bestimmt wird, wenn das Längungsverhältnis einen vorbestimmten Wert überschreitet.

12. Vorrichtung (1) nach den Ansprüchen 8, 9 und 10 in Kombination, wobei der auf den Schubzylinder (1121) ausgeübte Druck (P) gelöst wird, wenn ein Element aus maximalem Druckschwellenwert (Pmax) und maximalem Verformungsschwellenwert ($\Delta M1max$) erreicht wird, bevor der Kontaktschwellenwert (K) des Leitungsabschnitts (5) erreicht wird, um eine Beschädigung der Leitung (5) zu vermeiden.

**13.** Verfahren zum Messen eines mechanischen Spiels (7) zwischen einer verformbaren Leitung (5) und einer starren Wand (6), das durch eine Vorrichtung (1) zum Messen des mechanischen Spiels durchgeführt wird, wobei die Vorrichtung (1) wenigstens einen Tragwagen (12) umfasst, der dazu angeordnet ist:

sich innerhalb der Leitung (5) bis zu einem Leitungsabschnitt (5) in einer vordefinierten Position (x) zu bewegen, und

eine Messstruktur (11) zu tragen, die wenigstens einen Schubzylinder (1121) umfasst, der mit einem Schubschuh (1122) verbunden ist, wobei der Schubschuh (1122) dazu ausgebildet ist, auf einem Innenflächenelement (52) des Leitungsabschnitts (5) aufzuliegen, wobei das Messverfahren umfasst:

f) Erfassen (S1a) einer axialen Position (x) des Tragwagens (12) entsprechend der vordefinierten Position des Leitungsabschnitts (5) in Bezug auf eine axiale Position mit vorbestimmtem Ursprung (O),

g) Erfassen (S1b) einer radialen Position ($\alpha$) der Messstruktur (11) am Leitungsabschnitt (5) relativ zu einer vorbestimmten radialen Position mit vorbestimmem Ursprung,

h) Ausüben (S2) eines Anfangsdrucks (P0) auf den Schubzylinder (1121), um den Schubschuh (1122) mit dem inneren Flächenelement (52) des Leitungsabschnitts (5) in Kontakt zu bringen, und den Anfangsdruck (P0) aufheben,

i) Ausüben (S3) eines Drucks (P) auf den Schubzylinder (1121), um eine radiale Verformung ($\Delta M1$) am Leitungsabschnitt (5) zu induzieren, und Erfassen (S4) wenigstens eines Messwerts des Drucks (P), der der durch den genannten Druck (P) induzierten radialen Verformung ($\Delta M1$) zugeordnet ist, und eines Messwerts der genannten radialen Verformung ($\Delta M1$) des Leitungsabschnitts (5),

j) Wiederholen des Schritts d) durch Erhöhen des auf den Schubzylinder ausgeübten Drucks und Erfassen (S4) wenigstens des ausgeübten Drucks (P) bei jeder Wiederholung bis ein Schwellenwert (S51, S52) erreicht ist,

k) nach Erfassen des Schwellenwerts Erhalten der Daten bezüglich des mechanischen Spiels aus wenigstens den Messungen des Drucks (P) und der radialen Verformung ($\Delta M1$).

**14.** Anwendung des Messverfahrens nach Anspruch 13 zur Bestimmung der mechanischen Festigkeit einer unter Hydraulikdruck stehenden Leitung (5), wobei die Leitung (5) eine Leitung einer hydraulischen Anlage ist und wobei die starre Wand (6) eine Fels- und/oder Betonwand ist.

**15.** Computerprogramm mit Anweisungen zur Durchführung des Verfahrens nach Anspruch 13, wenn die Anweisungen von einer Verarbeitungsschaltung (PROC, MEM, INT) einer Vorrichtung nach Anspruch 1 ausgeführt werden.

**Claims**

**1.** A device (1) for measuring mechanical clearance (7) between a deformable duct (5) and a rigid wall (6), the device (1) comprising at least one carriage (12) arranged:

- to move inside the duct (5) up to a portion of the duct (5), of a predefined position (x), and
- to carry a measurement structure (11) comprising at least one push ram (1121) connected to a push pad (1122), the push pad (1122) being shaped to bear on an internal surface element (52) of the duct (5) portion, wherein the push ram (1121) is arranged to convert a pressure (P) received into a mechanical force exerted, via the push pad (1122), on the internal surface element (52) of the duct (5) portion by inducing at least one radial deformation ($\Delta M1$) of the duct (5) portion until a threshold is detected, the device (1) further including:
- a member for pressurising the push ram (1121), capable of measuring at least the pressure (P) exerted on the push ram (1121),
- measurement equipment capable of obtaining a measurement of the radial deformation ($\Delta M1$) of the duct (5) portion, the device (1) comprising means for detecting said threshold, said threshold being detected from measurements of the pressure (P) and the radial deformation ($\Delta M1$) obtained by the device (1),

the device (1) being configured to obtain, after detecting the threshold, data relating to said mechanical clearance from, at least, the measurements of the pressure (P) and the radial deformation ($\Delta M1$).

**2.** The device (1) according to claim 1, the portion of the duct (5) being of cylindrical shape with an axis of revolution X, wherein a connecting member (10) connects the measurement structure (11) to the carriage (12) so that the measurement structure (11) is rotatably mounted relative to the carriage (12) along the axis of revolution X.

3. The device (1) according to one of the preceding claims, wherein the carriage (12) includes wheels (1211) to move inside the duct (5) by contacting the wheels (1211) on an internal surface (52) of the duct (5),
And wherein the carriage (12) further comprises at least one arm (122) mechanically connected to the wheels (1211), and comprising at least one attachment pad (1212) shaped to bear on an internal surface element (52) of the duct (5) portion so as to lock the carriage (12) to the portion of the duct (5).

4. The device (1) according to claim 3, wherein the carriage (12) includes a plurality of arms (122) each mechanically connected to wheels (1211), and hinged together in the form of an umbrella connection.

5. The device (1) according to one of the preceding claims, wherein the member for pressurising the push ram (1121) is connected to the push ram (1121) by at least one remotely controllable ram supply line, such that the pressure exerted on the push ram (1121) is adjustable and remotely measurable.

6. The device (1) according to one of the preceding claims, wherein the radial deformation ($\Delta$M1) of the duct (5) portion induced by said pressure (P) corresponds to an elongation of the duct (5) portion, said elongation reflecting an external surface (51) of the duct (5) portion moving closer to the rigid wall (6) on the mechanical clearance (7) between the duct (5) portion and the rigid wall (6).

7. The device (1) according to one of the preceding claims, wherein the measurement equipment includes a displacement sensor connected to the push pad (1122).

8. Device (1) according to one of the preceding claims, wherein, the duct (5) portion being made of a given material, the device (1) includes a memory (MEM) capable of storing at least one maximum pressure threshold (Pmax) of the duct (5) portion, said maximum pressure threshold (Pmax) at least depending on the given material of the duct (5) portion, and wherein said threshold is obtained for a pressure (P) exerted on the push ram (1121) less than or equal to said maximum pressure threshold (Pmax) of the duct (5) portion.

9. The device (1) according to one of the preceding claims, the duct (5) portion being cylindrical in shape and **characterised by** at least one diameter (D) and the device (1) including a memory (MEM) capable of storing at least one maximum deformation threshold ($\Delta$M1max) of the duct (5) portion, said maximum deformation threshold ($\Delta$M1max) at least depending on the diameter (D) of the duct (5) portion,
and wherein said threshold is less than or equal to the maximum deformation threshold ($\Delta$M1max) so that the radial deformation ($\Delta$M1) of the duct (5) portion induced by said pressure (P) exerted on the push ram (1121) does not exceed the maximum deformation threshold ($\Delta$M1max).

10. Device (1) according to one of the preceding claims, wherein an increase in the pressure (P) exerted on the push ram (1121) induces a proportional increase in the radial deformation (M1$\Delta$) of the duct (5) portion up to a contact threshold (K) corresponding to a contact situation between an external surface (51) of the duct (5) portion with the rigid wall (6), said contact threshold (K) being reached upon detection of a$\Delta$smaller variation in radial deformation (M1) despite a constant increase in pressure (P) exerted on the push ram (1121), said threshold being greater than or equal to said contact threshold (K).

11. The device (1) according to claim 10, the device (1) being arranged to estimate an elongation ratio relating the pressure exerted (P) to the radial deformation ($\Delta$M1) induced by said pressure (P) exerted, as a function of measurement data ($\Delta$M1, P) at least received from the measurement equipment and the pressurising member respectively,
and wherein the contact threshold (K) is determined to be reached when the elongation ratio becomes greater than a predefined value.

12. The device (1) according to claims 8, 9 and 10 taken in combination, wherein the pressure (P) exerted on the push ram (1121) is relieved if one element among the maximum pressure threshold (Pmax) and the maximum deformation threshold ($\Delta$M1max) is reached before reaching the contact threshold (K) of the duct (5) portion, so as not to risk deteriorating the duct (5).

13. A method for measuring mechanical clearance (7) between a deformable duct (5) and a rigid wall (6) implemented by a mechanical clearance measurement device (1), the device (1) comprising at least one carriage (12) arranged:

- to move inside the duct (5) up to a portion of the duct (5), of a predefined position (x), and

- to carry a measurement structure (11) comprising at least one push ram (1121) connected to a push pad (1122), the push pad (1122) being shaped to bear on an internal surface element (52) of the duct (5) portion, the measurement method consisting of:

f) reading out (S1a) an axial position (x) the carriage (12) corresponding to the predefined position of the duct (5) portion with respect to a predefined original axial position (O),

g) reading out (S1b) a radial position ($\alpha$) of the measurement structure (11) on the duct (5) portion with respect to a predefined original radial position,

h) exerting (S2) an initial pressure (P0) on the push ram (1121), to contact the push pad (1122) on the internal surface element (52) of the duct (5) portion and read out said initial pressure (PO),

i) exerting (S3) a pressure (P) on the push ram (1121) so as to induce a radial deformation ($\Delta$M1) on the duct (5) portion and reading out (S4) at least one measurement of the pressure (P) associated with the radial deformation ($\Delta$M1) induced by said pressure (P) and a measurement of said radial deformation ($\Delta$M1) of the duct (5) portion,

j) reiterating step d) by increasing the pressure exerted on the push ram and reading out (S4) at each iteration at least the pressure (P) exerted until reaching a threshold (S51, S52),

k) obtaining, after detecting the threshold, data relating to said mechanical clearance from at least the measurements of the pressure (P) and the radial deformation ($\Delta$M1).

14. An application of the measurement method according to claim 13 to the determination of a mechanical strength of a duct (5) subjected to hydraulic pressure, wherein said duct (5) is a hydraulic installation duct and said rigid wall (6) is a rock and/or concrete wall.

15. A computer program including instructions for implementing the method according to claim 13, when said instructions are executed by a processing circuit (PROC, MEM, INT) of a device according to claim 1.

FIG. 1

FIG. 2

FIG. 3

FIG. 4

FIG. 5

1212

1211

1211

1213

121

FIG. 6

1122

1121

112

FIG. 7

111

1122

1121

51

52

112

FIG. 8

FIG. 9

FIG. 10

FIG. 11

FIG. 12

FIG. 13

POS. AXIALE x — S1a

POS. RADIALE $\alpha$ — S1b

PRESS. FIXATION — S1c

PO; INITIALI. — S2

AUGM. PRESSION P — S3

MESURES ( P; $\Delta$M1) — S4

Non — $\Delta$M1 = K ? — Oui — S51

$\Delta$M1 = $\Delta$M1 max ? — Non — S52

Oui

STOP — S6

# FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017131175 A1
- SU 922505 A1
- CN 109027436 A